(19) Europäisches Patentamt
European Patent Office
Office européen des brevets

(11) Publication number: 0 083 253
A2

# (12) EUROPEAN PATENT APPLICATION

(21) Application number: 82307039.6

(22) Date of filing: 22.12.82

(51) Int. Cl.$^3$: G 02 F 1/133

(30) Priority: 28.12.81 JP 213263/81

(43) Date of publication of application:
06.07.83 Bulletin 83/27

(84) Designated Contracting States:
DE FR GB IT

(71) Applicant: EPSON CORPORATION
3-5, 3-chome, Owa
Suwa-shi Nagano-ken(JP)

(71) Applicant: KABUSHIKI KAISHA SUWA SEIKOSHA
4-3-4, Ginza Chuo-ku
Tokyo(JP)

(72) Inventor: Shiraishi, Yoshiaki
80, Oaza-hirookaharashinden
Shiojiri-shi Nagano-ken(JP)

(74) Representative: Miller, Joseph et al,
J. MILLER & CO. Lincoln House 296-302 High Holborn
London WC1V 7JH(GB)

## (54) Liquid crystal optical printing apparatus.

(57) A liquid crystal optical printing apparatus comprising a light source (*k*), a liquid crystal panel (*a*) which is arranged to be irradiated with light which is emitted from said light source (*k*) and which is provided with a plurality of light valves (*a*-1), and means (*b*) for selectively opening and closing said light valves (*a*-1) characterised in that the liquid crystal panel (*a*) is provided with nematic liquid crystal material whose dielectric anisotropy can be inverted in dependence upon the frequency, the driver means (*b*) being arranged to drive said liquid crystal panel (*a*) at higher and lower frequencies respectively to control the orientation of the molecules of the liquid crystal material so as to control the transmission and blocking of light through the liquid crystal panel (*a*).

EP 0 083 253 A2

./...

Croydon Printing Company Ltd.

Fig 2(a)

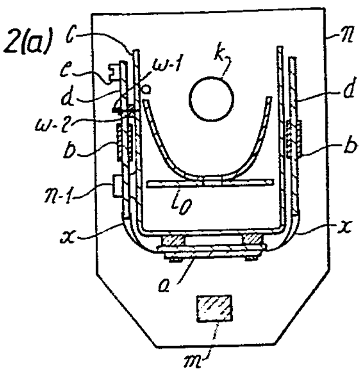


Fig.2(b).

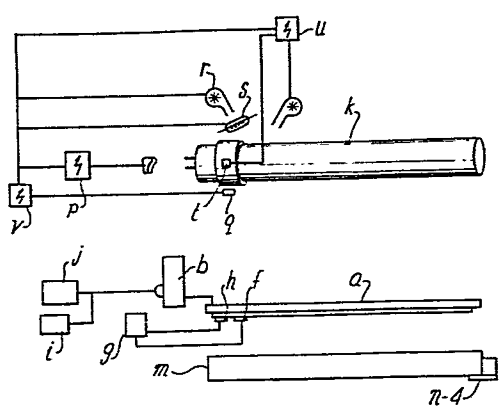

"LIQUID CRYSTAL OPTICAL PRINTING APPARATUS"

The present invention relates to an optical printing apparatus employing liquid crystal material and it relates more particularly to a printing apparatus having a liquid crystal display using a nematic-type liquid crystal material having dielectric anisotropy that can be inverted in dependence upon frequency.

A laser printer has been used as an optical printing or copying apparatus for producing printed picture images of high quality. The laser printer is however disadvantageous in that it is powered by high voltage, utilizes dangerous laser beams, and is expensive to construct. Various apparatus have been proposed to replace the laser printer, examples being an apparatus using LEDS and an apparatus with liquid crystals serving as an optical shutter, as described in U.S. Patents Nos. 4,110,794 and 4,297,022. However, these proposals have not resulted in marketable products, and are impracticable as the printing speed of the apparatus is too low.

It is an object of the present invention to provide an optical printing apparatus which will eliminate the foregoing prior difficulties and which employs liquid crystal material so that the apparatus can operate at high printing speed and has an improved cost to performance ratio.

According to the present invention, there is provided a liquid crystal optical printing apparatus comprising a light source, a liquid crystal panel which is arranged to be irradiated with light which is emitted from said light source and which is provided with a plurality of light valves, and means for selectively opening and closing said light valves characterised in that the liquid crystal panel is provided with nematic liquid crystal material whose dielectric anisotropy can be inverted in dependence upon the frequency, the driver means being arranged to drive said

liquid crystal panel at higher and lower frequencies respectively to control the orientation of the molecules of the liquid crystal material so as to control the transmission and blocking of light through the liquid crystal panel.

Preferably, optical fibres are provided which are arranged to effect self-focussing of incident light passing through the light valves.

There may be a light shield having a light outlet for shielding the liquid crystal panel from light and/or heat transmitted from said light source otherwise than through the light outlet, the driver means being disposed externally of said light shield.

There may be a feedback system comprising a light source heater for heating air; a motor fan for supplying air heated by said light source heater to heat said light source; a temperature sensor for sensing the temperature of a part of said light source; and a temperature controller connected to said light source heater, said motor fan, and said temperature sensor for maintaining the said part of said light source at a substantially constant temperature.

The temperature controller may be arranged to control the temperature of the wall of the light source to be in the range of from 35°C to 45°C.

There may also be a feedback system comprising a brightness sensor for detecting the brightness of said light source, a drive unit for driving said light source and a brightness sensor controller connected to said brightness sensor and to said drive unit.

The said light source may have a reflective layer, except in a light emitting area, and a layer of fluorescent material deposited on an inner surface of said reflective layer.

There may be a feedback system comprising a panel heater

attached to said liquid crystal panel for heating the latter, a sensor for detecting the temperature of said liquid crystal panel, and a heater controller connected to said panel heater and the last-mentioned sensor.

The said panel heater may comprise a support body and a resistive layer deposited on said support body for heating said liquid crystal panel with Joule heat generated by said resistive layer.

The fibres may be disposed in 1 to 1 correspondence with respect to said light valves.

The fibres may be joined into a unitary array.

The unitary array of fibres may be substantially rectangular in shape with gaps between the fibres being filled with black silicone resin. The unitary array of fibres may have side plates of FRP.

There may be a driver substrate for driving said liquid crystal panel, and a flexible substrate, said driver substrate and said liquid crystal panel being interconnected by soldering through said flexible substrate.

The flexible substrate may be a few centimeters long.

There may be soldered junctions between said flexible substrate and said liquid crystal panel, and between said flexible substrate and said driver substrate, at least one of which soldered junctions is reinforced with a reinforcing agent. Said junctions may be soldered thermally under pressure. At least said driver substrate may be covered with a moisture-resistant coating.

The driver means may comprise a flat package IC, said IC being soldered to said substrate by printing a cream of solder on said substrate, placing said IC on said cream of solder, and passing said substrate through a far-infrared furnace to solder said IC to said substrate. The said substrate to which said IC

is soldered may be dipped in a cleaning solution of alcohol and ultrasonically cleaned therein.

The light shield is preferably made of metal.

There may be an external frame having therein at least said light source, said liquid crystal panel, and said fibres. The said frame may be painted black.

There may be a rod lens disposed between said light source and said liquid crystal panel for focusing light from said light source onto the liquid crystal panel.

The liquid crystal panel may be composed of a pair of substrates and a liquid crystal material sealed between said substrates, said liquid crystal material being of a nematic structure having a dielectric anisotropy which becomes zero at a crossover frequency, said liquid crystal material having molecules disposed at wall surfaces of said substrates and oriented parallel to the substrates, said liquid crystal molecules being twisted between said substrates, and polarizers disposed on opposite sides respectively of said liquid crystal panel, said liquid crystal material being arranged to be subjected to an applied electric field having a drive frequency lower than said crossover frequency and an applied electric field having a drive frequency higher than said crossover frequency to control orientation of the liquid crystal molecules for transmitting and blocking light through said liquid crystal panel.

The dielectric anisotropy is preferably positive at a drive frequency lower than said crossover frequency, and is negative at a drive frequency higher than said crossover frequency.

The liquid crystal molecules are preferably twisted through substantially $450^{\circ}$ between said substrates.

The liquid crystal panel may include a liquid crystal sealing portion having layers of $SiO_2$ on said substrates, a transparent

electrode layer on each of said layers of $SiO_2$, a metal layer deposited on said transparent electrode layers and extending from a terminal portion of said liquid crystal panel to a position adjacent to a light valve, a layer of $SiO_2$ deposited on said metal layer, a layer of orienting agent deposited on said last-mentioned layer of $SiO_2$, said liquid crystal panel also including a terminal portion having a layer $SiO_2$ on each of said substrates, and a metal layer deposited on said last-mentioned layer of $SiO_2$. Said transparent electrode layers may be made of at least one of $In_2 O_3$, $SnO_2$ $Sn_2O_3$. The said layer of orienting agent may be made of at least one of polyimide, polyamide, and silane.

Said transparent electrode layers may include signal transparent electrodes and scanning transparent electrodes said signal transparent electrodes having metal layers extending from the terminal portion to the portion adjacent to the light valves, said scanning transparent electrodes having metal layers deposited except for the light valves. The said metal layers may be made of one of Au, Ag, Cu and Ni. The said metal layers may be deposited by electroless plating.

Said polarizers may have axes of polarization extending at substantially $90^{o}$ to each other, said liquid crystal molecules being orientable perpendicularly to said substrates when said liquid crystal panel is driven at a frequency to block light, and orientable parallel to said substrates when said liquid crystal panel is driven at a frequency to transmit light.

Said liquid crystal panel may be drivable by a liquid crystal drive waveform applied to scanning electrodes, said liquid crystal drive waveform having a period including a selected interval and a nonselected interval. The arrangement may be such that a frequency higher than said crossover frequency is applied during said selected

interval and a frequency lower than said crossover frequency is applied during said nonselected interval. Said liquid crystal panel may be drivable in a multiplex mode at a frequency having a period divided into n equal portions from the selected interval for the first scanning electrode to the selected interval for the nth scanning electrode, said selected interval being divided into selected and nonselected portions. n is preferably 2. Said liquid crystal panel may be drivable by a liquid crystal drive waveform applied to scanning electrodes and having a first voltage amplitude and by a liquid crystal drive waveform applied to signal electrodes and having a second voltage amplitude, said first and second voltage amplitudes being equal to each other.

Said liquid crystal molecules may be orientable parallel to said substrates when a high-frequency voltage in the range of from +Vo to -Vo (Vo ≠ 0) is applied to the liquid crystal panel with a desired potential being a reference, and said liquid crystal molecules are orientable perpendicularly to said substrates when a low-frequency voltage in the range of from +Vo to -Vo, or a high-frequency voltage in the range of from +2Vo to 0 or from 0 to -2Vo, is applied to said liquid crystal panel.

Light may be allowed to pass through said liquid crystal panel when said liquid crystal molecules are oriented paralled to said substrates, light being prevented from passing through said liquid crystal panel when said liquid crystal molecules are oriented perpendicularly to said substrates.

According to another aspect of the present invention, there is provided a liquid crystal optical printing apparatus comprising a light source, a liquid crystal panel which is arranged to be irradiated with light which is emitted from said light source and which is provided with a plurality of light valves, means for selectively opening and closing said light valves, and a light shield

having a light outlet for shielding the liquid crystal panel from light and/or heat transmitted from said light source otherwise than through the light outlet characterised in that the means for selectively opening and closing the light valves comprises driver means disposed externally of said light shield, optical fibres being employed to effect self-focusing of incident light passing through the light valves; the light source, light outlet, liquid crystal panel and optical fibres being arranged in a rectilineal arrangement.

According to yet another aspect of the present invention, there is provided a liquid crystal optical printing apparatus comprising a liquid crystal cell composed of a pair of substrates and a liquid crystal material sealed between said subtrates, said liquid crystal material being of a nematic structure having a dielectric anisotropy which becomes zero at a crossover frequency, is positive at a drive frequency lower than said crossover frequency, and is negative at a drive frequency higher than said crossover frequency, said liquid crystal material having molecules disposed at wall surfaces of said substrates and oriented parallel to the substrates, said liquid crystal molecules being twisted through $450^{o}$ between said substrates by being oriented and by an optically active agent added to said liquid crystal material, and polarizers disposed upwardly and downwardly of said liquid crystal cell, said liquid crystal material being subjected to an applied electric field having said drive frequency lower than said crossover frequency and an applied electric field having said drive frequency higher than said crossover frequency to control orientation of the liquid crystal molecules for transmitting and blocking light through said liquid crystal cell.

The invention is illustrated merely by way of example, in the accompanying drawings, in which:-

Fig. 1 is illustrative of a printing system incorporating a

printing apparatus according to the present invention;

Figs. 2(a), 2(b) and 2(c) are respectively a cross-sectional view of the printing apparatus of the present invention, a diagram thereof including a control system, and an exploded perspective view of the said printing apparatus;

Figs. 3(a) to 3(c) show a liquid crystal panel forming part of the printing apparatus according to the present invention;

Figs. 4(a) to 4(e) are diagrams illustrating characteristics of a liquid crystal panel which may be employed in the printing apparatus of the present invention;

Figs. 5(a) and 5(b) are diagrams illustrative of the manner in which the liquid crystal panel is driven;

Fig. 6(a) is a timing chart for signal waveforms which may be used in the printing apparatus of the present invention;

Fig. 6(b) shows a circuit arrangement for generating said signal waveforms;

Fig. 6(c) is a diagram showing a liquid crystal driver which may be used in the printing apparatus of the present invention;

Fig. 7(a) is a cross-sectional view of a lamp which may be employed in the printing apparatus of the present invention, and Figs. 7(b) and 7(c) illustrate characteristics of this lamp;

Fig. 8 is a fragmentary perspective view of a self-focusing lens array which may be used in the printing apparatus according to the present invention;

Fig. 9 is a side elevational view of a liquid crystal heater which may be employed in the printing apparatus according to the present invention;

Figs. 10(a) to 10(i) illustrate progressive steps in the fabrication of the printing apparatus according to the present invention;

Fig. 11 is a view similar to Fig. 2(a) but illustrating a printing apparatus incorporating a rod lens y according to a second embodiment of the present invention; and

Figs. 12(a) and 12(b) are diagrams showing the rod lens.

Terms such as "upper" and "lower" as used in the description below are to be understood to refer to directions as seen in the accompanying drawings.

## System employing a printing apparatus according to the present invention

Fig. 1 is a schematic diagram of a printing system in which a printing apparatus A of the present invention may be incorporated.

The printing system includes a photosensitive drum B, a printing apparatus A of the present invention, and a transfer corona discharge unit 1 which will operate in synchronism at a printing speed under the control of a driver circuit J.

Signals indicative of letters, numerals, patterns and the like to be printed are supplied from an external source to the printing apparatus A in which they are converted into corresponding optical signals that are transmitted to the photosensitive drum B rotating in synchronism with a printing speed. Electric discharges on the photosensitive drum B, at portions thereof where the optical signals are applied, are eliminated to thereby form an electrostatic latent image on the photosensitive drum B according to the write signals supplied from the printing apparatus A.

The electrostatic latent image on the photosensitive drum B is developed with toner by a developing unit K of the magnetic roller type, for example.

The developed toner image is then transferred by a transfer corona discharge unit onto a sheet D of recording paper travelling in synchronism with the photosensitive drum B by virtue of being passed between the latter and a roller E. The toner image is fixed to the sheet D by a fixing unit F with light, heat and pressure

applied thereby.

The area on the photosensitive drum B from which the toner image has been transferred is brought toward a blade G by which any residual toner is removed from such area. Any residual image on the photo photosensitive drum B is then removed by a charge remover H comprising an AC corona discharge unit or lamp. The photosensitive drum B is charged again by the corona discharge unit I, and then supplied with optical write signals from the printing apparatus A so that another latent image will be formed thereon.

The foregoing processes will be repeated in succession to produce prints or copies. The printing apparatus A according to the present invention is incorporated in the above printing system.

Printing apparatus A

Fig. 2 is schematically illustrative of the printing apparatus A according to the present invention. Fig. 2(a) is a cross-sectional view of the printing apparatus; Fig. 2(b) is a diagram of the printing apparatus including a control system; and Fig. 2(c) is an exploded perspective view of the printing apparatus.

The printing apparatus comprises a liquid crystal panel a filled with a nematic-type liquid crystal material having its dielectric anisotropy rendered negative by a high frequency of drive signals and rendered positive by a low frequency of drive signals. The liquid crystal panel a includes upper and lower substrates between which the liquid crystal material is sandwiched, the upper and lower substrates having their surfaces horizontally oriented to cause liquid crystal molecules to extend parallel to the substrates. The liquid crystal molecules are twisted between the substrates. Polarizers are arranged with their polarization axes aligned to block light transmission vertically across the liquid crystal material. The liquid crystal panel a is driven selectively by drive signals having high and low

frequencies to open and close light valves thereof at a high speed.

Liquid crystal drivers b are mounted on substrates d for driving the liquid crystal panel a at two frequencies. The liquid crystal panel a and the substrates d are interconnected by connector substrates x over which liquid crystal drive signals from the drivers b are transmitted to the liquid crystal panel a to drive the latter. The substrates d are fixed to a chassis c by a substrate fixture w-1 such as a screw with an insulator w-2 suchas an insulating plate, an adhesive or a double-sided adhesive tape interposed therebetween. The printing apparatus also includes a frame n serving as an outer housing to unitize the components of the printing apparatus.

The substrate d on which the liquid crystal drivers b are mounted and the liquid crystal panel a drivable by the liquid crystal drivers b jointly constitue a module which is attached to the frame n by an attachment n-1. A connector e is mounted on the frame n by the attachment n-1 and is connected to an external power supply j for driving the liquid crystal drivers b and an interface i of an external signal source.

A light source k , such as a tungsten lamp, a halogen lamp, a xenon lamp, or a fluorescent lamp, emits light which travels through a light outlet or slit defined in a light shield or shield plate o and irradiates the liquid crystal panel a. The light shield o, other than at the light outlet, blocks the light and heat emitted from the light source k.

The light valves of the liquid crystal panel a are arranged in a single row or a plurality of rows and are actuatable to pass only the light which is required to effect printing. The light which has passed through the light valves of the liquid crystal panel a is focused by a SELFOC (self-focusing) lens array m on the surface of the photosensitive drum B (Fig. 1).

A panel heater f is attached to the liquid crystal panel a to raise or lower the temperature of the latter. A sensor h is also attached to the liquid crystal panel a and connected to a heater controller g to transmit a signal from the sensor h to the heater controller g, thereby constituting a feedback system for controlling the heater f by means of the controller g.

The SELFOC lens array m is mounted on the frame n by an attachment n-4 such as a screw, a double-sided adhesive tape, or an adhesive.

The lamp k is secured to the frame n by an attachment n-2 such as a double-sided adhesive tape or an adhesive. The lamp k should preferably be a fluorescent lamp. To the lamp k, there is attached a temperature sensor t connected to a temperature controller u which is coupled to a lamp heater s and a motor fan r. The motor fan r serves to supply air as heated by the lamp heater s into the frame n to heat the lamp k. The temperature sensor t attached to the lamp k serves to detect the temperature of the lamp k as heated by the lamp heater s and to transmit a temperature-indicative signal to the temperature controller u. The temperature controller u controls the motor fan r and the lamp heater s and controls a lamp drive system p to maintain constant the temperature of the lamp k at its tube wall. The foregoing components associated with the lamp k thus jointly constitute a feedback system for keeping the lamp tube wall at a substantially contact temperature (e.g. within the range of 35°C to 45°C).

A brightness sensor q is disposed in the frame n in an area irradiated with the light emitted from the lamp k, and is connected to a brightness sensor controller v to provide a feedback system for controlling the intensity of the light radiated by the lamp k so that the light falling on the photosensitive drum B will have a constant

intensity per unit area at all times.

## Liquid crystal panel construction

Fig. 3 shows the liquid crystal panel a of the printing apparatus according to the present invention. Fig. 3(a) is a perspective view of the overall liquid crystal panel a; Fig. 3(b) is an enlarged fragmentary plan view of a light valve a-1 of the liquid crystal panel a; and Fig. 3(c) is a cross-sectional view taken along line A - A' of Fig. 3(b).

A liquid crystal material a-2 is sandwiched between upper and lower substrates a-3, a-4 and is sealed by a sealing agent a-5. The liquid crystal layer has a thickness of from 3 to 7 microns which is maintained by the sealing agent a-5 or glass fibres or glass particles of a constant thickness or diameter placed in the liquid crystal material a-2 so that there is no localized variation in the thickness of the liquid crystal layer throughout the panel a. The upper and lower substrates a-3, a-4 are made of transparent glass or transparent plastics material.

Each of the upper and lower substrates a-3, a-4 has on its surface facing the liquid crystal material a-2 a layer a-11 of $SiO_2$ deposited by sputtering, vacuum evaporation, dipping or the like. The layer a-11 serves to prevent alkali ions such as $Na^+$ from outside of the liquid crystal panel a or from the substrates a-3, a-4 from entering or contacting the liquid crystal material a-2, or serves to prevent moisture from being introduced into the liquid crystal material. The thickness of the $SiO_2$ layer a-11 ranges from about 400 to 2,000 angstrom units. If the layer a-11 were thinner than 400 angstrom units then it would be ineffective in preventing alkali ions or moisture from entering the liquid crystal layer. Conversely, if the layer a-11 were thicker than 2,000 angstrom units the layer a-11 itself would be liable to crack and its manufacture would be more costly by reason of an increased number of manufacturing steps.

A layer of transparent electrode patterns a-12, a-13 of $In_2O_3$ or $SnO_2$ is deposited on the $SiO_2$ layer by chemical etching or plasma etching. Transparent electrodes a-12, a-13 made of $In_2O_3$ have a much lower electrical resistance than that of those electrodes which are made of $SnO_2$ provided they are equal in thickness. Since the liquid crystal material a-2 is driven by high-frequency signals as well as low-frequency signals for high response speeds, the time constant determined by the capacitance of the liquid crystal material a-2 and the resistance between the driver b and the liquid crystal material a-2 is required to be as small as possible, and the transparent electrodes a-12, a-13 should thus desirably be made of $In_2O_3$ for its smaller resistance. The resistance from one of the terminals of the driver b to a corresponding light valve a-1 of the liquid crystal panel a is held within a range below a few hundreds of ohms. In Fig. 3(b), a signal electrode a-13 formed on the lower substrate a-4 is indicated by solid lines, while a scanning elelctrode a-12 formed on the upper substrate a-3 is indicated by dotted lines.

On the scanning transparent electrode a-12 and the signal transparent electrode a-13 on the upper and lower substrates a-3, a-4, there are formed metal layers a-14 of Au, Ag, Cu, Ni or the like at selected localized areas by sputtering, vacuum evaporation, plating or other processes, the metal layers of Ni being least expensive. Where the layers of Ni are deposited by plating, those areas which should not be plated with Ni are masked in advance by printed screens or coated photo-resist, and then layers of Ni are deposited by a known electroless plating process which is usually used to prepare plastics articles for electroplating. In such an electroless plating process, Ni layers are selectively formed in those patterns on the transparent electrodes a-12, a-13 which are not masked. The metal layers a-14 should be free from pinholes and of such a thickness

which prevents light transmission therethrough.

Fig. 3(b) shows a pattern of the liquid crystal panel a as the latter is driven at half of its duty cycle. The signal electrodes a-13 formed on the upper substrate a-3 have terminals on an upper portion a-13(a) and a lower portion a-13(b) of the plane which faces the liquid crystal material a-2, the said terminals being on opposite sides of the liquid crystal panel a. The upper terminal patterns of the signal electrodes a-13 and the lower terminal patterns of the signal electrodes a-13 are alternately disposed. The metal layer a-14 is formed on each of the signal electrode patterns a-13 and extends from the terminal ends to a position near the light valve a-1, and the portion of each signal electrode pattern a-13 which is aligned with the respective scanning electrode a-12 extends is transparent. The scanning electrodes a-12 deposited on the layer a-11 are covered with the metal layers a-14 except for the light valves a-1. The lower substrate a-4 has its terminal projecting out of the liquid crystal panel a, and the upper substrate a-3 has its scanning electrodes a-12 projecting out of the liquid crystal panel a. The metal layers a-14 on the scanning electrodes a-12 are soldered to lead wires which are connected to the drivers b.

A layer a-16 of $SiO_2$ is deposited on each of the metal layers a-14 by sputtering, vacuum evaporation or the like as are the $SiO_2$ layers a-11 formed on the upper and lower substrates a-3, a-4.

A layer of orienting agent a-17, such as of polyimide, polyamide or silane, is deposited on each $SiO_2$ layer a-16, e.g. by dipping or spraying, and is then horizontally oriented by rubbing.

Advantages of the liquid crystal panel construction

The liquid crystal panel constructed as shown in Figs. 3(a) to 3(c) has the following advantages:

First, the liquid crystal panel a can be driven at 1/2 duty cycle so that the drivers b (Fig. 2) may be half as many as those required for static driving of the liquid crystal panel.

Second, the metal layers a-14 of Ni, for example, are formed at

the terminals of the signal electrodes a-13 and the scanning electrodes a-12, and can be soldered to the substrates d on which the drivers b are supported through the flexible substrates x. This connecting arrangement reduces resistance and assures high connection reliability.

Third, by reason of the provisions of the metal layers a-14 deposited on the transparent electrodes a-12, a-13, the electrical resistance from the drivers b (Fig. 2) to the liquid crystal material a-2 can be reduced and thus the time constant can be lowered. The lowered time constant is particularly important for the printing apparatus A of the invention in which the liquid crystal panel is driven at a high frequency for high-speed response.

The fourth advantage is that the metal layers a-14 are formed on the scanning electrodes a-12 except for the light valves a-1 of the liquid crystal panel a, and no metal alyer a-14 is formed at the light valves a-1 on the opposite signal electrodes a-13, leaving the light valves transparent. This will facilitate positioning of the optical system.

According to the fifth advantage, light transmission is blocked by the metal layers a-14 to prevent light from passing through portions other than the light valves a-1. Therefore, the signal-to-noise ratio for a latent image on the photosensitive drum B (Fig. 2) is improved for a sharper printed image.

The sixth benefit is that by reason of the provisions of the metal layers a-14 which are used to prevent light passage, the width of the scanning electrodes a-12 is larger than the diameter of each light valve a-1, and hence the resistance of the lines composed of the scanning electrodes a-12 is reduced, an arrangement to which is attributable the high-speed response of the liquid crystal material a-2.

## Liquid crystal material

The liquid crystal material contained in the liquid crystal panel a shown in Fig. 3 is a mixture of the nematic type which is composed of:

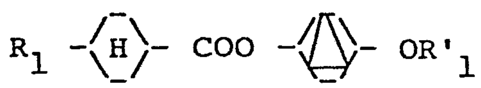

(Compound 1)

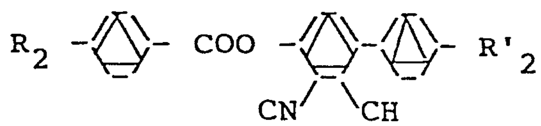

(Compound 2)

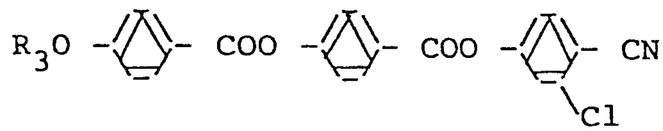

(Compound 3),

where $R_1 - R_2$, $R'_1 - R'_3$ are one of the following groups:

| | |
|---|---|
| alkyl group | $C_nH_{2n+1}-$ |
| alkoxy group | $C_nH_{2n+1}O-$ |
| cyanogen group | $-C \equiv N$, |

with n being in the range of from 1 to 20.

The compound 1 is used for reducing the viscosity of the liquid crystal material. The compound 1 is advantageous in that it is of reduced viscosity and can provide a low relaxation frequency. For example, the compound 1 has a drive frequency which is of a figure one digit smaller than that for biphenyl liquid crystals, and can be driven in a wide range of temperatures.

The compound 2 is added to increase the absolute value of the dielectric anisotropy of liquid crystal molecules at high frequencies.

The compound 3 is included to increase the absolute value of the dielectric anisotropy of liquid crystal molecules at high frequencies.

The following table shows an example of the liquid crystal material which can be used in the printing apparatus according to the present invention.

| Compound | Mixture ratio (wt%) | |
|---|---|---|
| 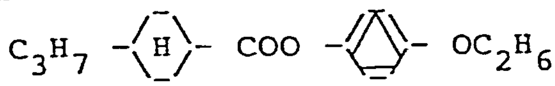 | 20 | 60 |
| 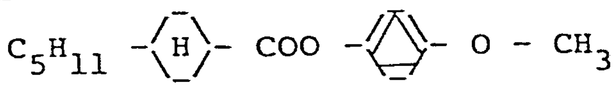 | 20 | |
| 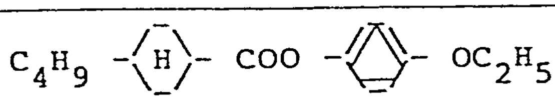 | 10 | |
| 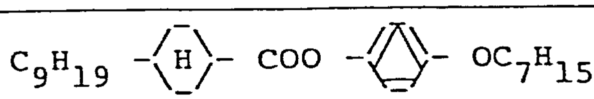 | 10 | |
| 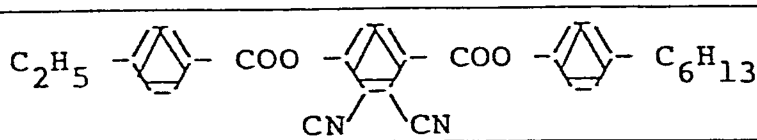 | 7 | 20 |
| 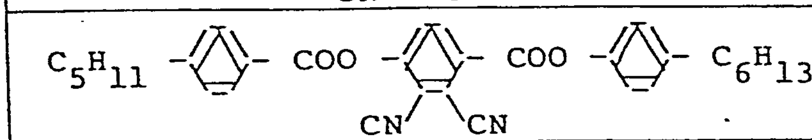 | 7 | |
| 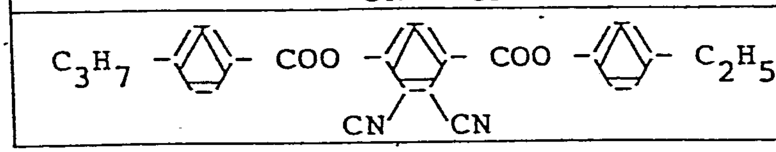 | 6 | |

| | | |
|---|---|---|
| 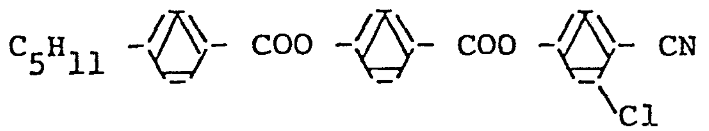 | 10 | 20 |
| 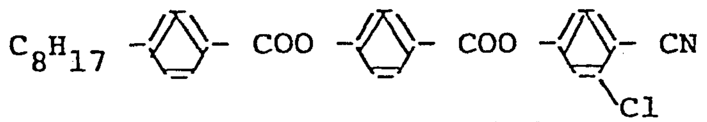 | 5 | |
| 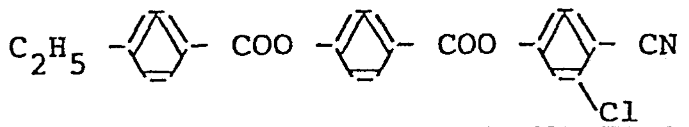 | 5 | |

Fig. 4(a) shows frequency-dependent variations in the dielectric anistropy of the liquid crystal material according to the Table. The dielectric anisotropy $\varepsilon_{1}$ in the transverse direction of the liquid crystal molecule is substantially 1.8 and free from variations due to different frequencies, while the dielectric anisotropy $\varepsilon_{11}$ in the longitudinal direction of the molecules is positive when the frequency is low and negative when the frequency is high. The overall dielectric anisotropy $\Delta\varepsilon$, where $\Delta\varepsilon = \varepsilon_{11} - \varepsilon_{1}$, is positive when the frequency is low, is zero when the frequency is about 13 KHz, and is negative when the frequency is higher than about 13 KHz. Therefore, when the liquid crystal panel is driven at a low frequency, the longitudinal direction of the liquid crystal molecules is oriented perpendicularly to the substrates, and when the liquid crystal panel is driven at a high frequency, the longitudial direction of the liquid crystal molecules is oriented paralled to the substrates.

To the above-mentioned crystal material there is further added 2 to 3 % of an optical active agent which is defined by the following formula:

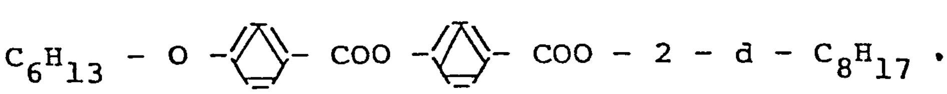

The resultant liquid crystal material is of a chlesteric phase having a long helix pitch of about 4 microns.

A liquid crystal panel a which was thus constructed had a low relaxation frequency of 5 KHz at 25°C, and thus could be driven with ease with low power consumption. The dielectric anisotropy at a low frequency was large as it was 6 at 500 Hz and 5 at a higher frequency of 70 KHz, a value sufficient for controlling the orientation of the molecules of the liquid crystal material a-2. The viscosity of the liquid crystal molecules was low, it being about 10 CPS. When driven at a high frequency of 70 KHz, the liquid crystal material exhibited a sufficiently high response. When the liquid crystal panel was driven at a voltage of 30V and a low frequency of 500 Hz or a high frequency of 70 KHz in an atmosphere at 30°C, the liquid display panel operated in rise and fall times in the range of from 0.1 to 0.5 ms, a figure two digits faster than the response speed of an ordinary liquid crystal panel which ranges from a few tens to a few hundreds ms. The printing apparatus A (Fig. 1) according to the present invention is thus operable at a high response speed, and the printing system incorporating the printing apparatus of the invention will be able to operate at a high speed.

Fig. 4(c) is illustrative of a liquid crystal construction of the liquid crystal panel a in accordance with the present invention. The substrates a-3, a-4 are treated by rubbing or by vacuum evaporation of SiO or $SiO_2$ to orient the liquid crystal molecules. Where the substrates are to be treated by rubbing, they should be rubbed downwardly in a direction normal to the sheet of the drawings. The upper and lower substrates a-3, a-4 may be interchanged. The upper and lower substrates a-3, a-4 may be brought to an equivalent condition by way of vacuum evaporation of SiO or $SiO_2$. By thus orienting the upper and lower substrates a-3, a-4, the liquid crystal

molecules are oriented in their upper and lower layers as shown in Fig. 4(c). More specifically, the liquid crystal molecules a-2 are rotated through about 450°.

Fig. 4(b) illustrates the relationship between the concentration of the optically active agent added and the angle of rotation of the liquid crystal molecules a-2 correlated to the thickness of the liquid crystal layer. The liquid crystal molecules a-2 are twisted through 450° in the hatched region. When the optically active agent added is of 2 wt%, the thickness of the liquid crystal layer needs to be in the range of from about 4 to 6 microns, and when the optically active agent is of 3 wt%, the thickness of the liquid crystal layer is required to range from about 3 to 4.5 microns. The thickness determination can be effected simply by either determining the space within the liquid crystal panel between the upper and lower substrates a-3, a-4 and then the concentration of the optically active agent, or by determining the amount of the optically active agent to be added and then the thickness of the layer of the liquid crystal panel a.

Response speeds of the liquid crystal panel when different amounts of optically active agent are added are shown in Fig. 4(d). During a time interval of from 0 to 0.5 ms, the liquid crystal panel a is supplied with a signal to open the light valves, and during a time interval of from 0.5 to 1 ms, the liquid crystal panel a is supplied with a signal to close the light valves. If no optically active agent is added, or the liquid crystal molecules are oriented or twisted 90°, the ratio of transmission of light through the liquid crystal panel is of the order of 50 %, and the response speed is low. Where, however, the amount added of the optically active agent ranges from 2.0 to 3.0 wt%, that is, the liquid crystal molecules are twisted about 450°, the ratio of light transmission is 100 %. If the amount of optically active agent added is more than 3.0 % and the liquid

crystal molecules are oriented more than 630°, the light valves of the liquid crystal panel operate at a lower response speed, and the light transmission ratio falls short of 100%.

Fig. 4(e) is a graph of temperature vs. transmitted-light energy characteristics plotted when an electric field of about 30V was applied to the liquid crystal panel thus fabricated at a high frequency of about 70 KHz to open the light valves for light transmission. The ordinate of the graph represents relative values for the energy of light transmitted.

In addition, the transmission energy is indicated by the small graph shown in Fig. 4(e). In the small graph, the abscissa shows time (m sec) and the ordinate shows the ratio of transmission. If the liquid crystal light valves open during 0 - 1 ms, the ratio of light transmission is 100% at 0 ms and theoretically remains 100% until 1 ms. The light energy S transmitted through the liquid crystal shutter is indicated by the area of a quadrangle whose abscissa indicates a time of 0 - 1 ms, and whose ordinate indicates a rate of transmission of 0 - 100%. The area of the quadrangle is regarded as 100%. The liquid crystal light valves are opened during 0 - 0.5 ms and are shut during 0.5 - 1 ms in Fig. 4(e). Thereupon the light transmitted through the liquid crystal light valves generates the curved line shown in the small graph. The light energy transmitted through the liquid crystal light valves is indicated by the cross-hatched area which is surrounded by the said curved

line. The ratio of this cross-hatched area to the respective theoretical area is defined as the light transmitting energy S.

Study of the graph indicates that the liquid crystal panel a allowed a maximum amount of light to be transmitted therethrough when its temperature was in the range of from 35°C to 47°C, and the energy intensity of the light transmitted through the liquid crystal light valves was reduced when the temperature was outside the above range. This was the case when the voltage applied to the liquid crystal panel was anywhere between 5 and 40V, and the high-frequency electric field had a frequency ranging from 20 KHz to 300 KHz. Furthermore, the above relationship as shown in Fig. 4(e) remained unchanged when the cell thickness ranged from 3 to 12 microns. As shown in Fig. 2(b), the liquid crystal panel a is provided with the panel heater f and the temperature sensor h which are connected to the heater controller g thereby provide a feedback system for controlling the liquid crystal panel a to be kept at a constant temperature. The temperature measured was 25°C.

The liquid crystal panel a of the above structure was excellent in its ability to resist environmental attack and aging. For example, the molecule orientation and current consumption requirement were not changed when the liquid crystal panel was left for one month at 60°C and 90% RH (relative humidity). No problem occurred after the liquid crystal panel had been left in an atmosphere of 80°C for three months.

Also, the liquid crystal panel suffered from no malfunction when it was left in an atmosphere of -30°C for one week.

The liquid crystal panel a described above is completely different from conventional liquid crystal panels of the DSM type, and is suitable for practical use from the standpoints of reliability and aging. Prior liquid crystal display panels of the DSM type lacked sufficient reliability because a dopant is added to the liquid crystal material for optical dispersion, and this consumed a large amount of current. Threrefore, such conventional LCD panels failed to find widespread use. However, the use of a liquid crystal material as described above of a twisted nematic-structure, ensures a greatly improved reliability and current consumption. The printing apparatus of the present invention is thus able to effect high-speed printing by maintaining the liquid crystal panel a at a constant temperature.

Driving of the liquid crystal panel

The liquid crystal panel is driven statically or dynamically with a 1/2 duty cycle, that is, alternately at low and high frequencies for high speed switching. Fig. 5(a) is illustrative of the way in which the liquid crystal light valves are driven.

The liquid crystal molecules have a negative dielectric anisotropy $\Delta\varepsilon$ at a high frequency and a positive dielectric anisotropy $\Delta\varepsilon$ at a low frequency. The liquid crystal molecules are oriented parallel to the upper and lower substrates a-3, a-4 and twisted through a certain angle. Upper and lower polarizers (not shown) are placed above and below the liquid crystal panel a to allow passage of light therethrough while no electric field is imposed on the liquid crystal panel a, the upper and lower polarizers having axes of polarization crossed at about 90°. When the frequency of the electric field applied to the liquid crystal molecules is low and the dielectric anisotropy $\Delta\varepsilon$ is positive, the longitudinal axes of the liquid crystal molecules extend substantially normal to the upper and lower substrates a-3, a-4 to cut off the light falling on the liquid crystal panel, which light is therefore not transmitted to the

photosensitive drum B (Fig. 1). Conversely when the electric field applied to the liquid crystal molecules has a higher frequency with the result that the dielectric anisotropy is negative, the longitudinal axes of the liquid crystal molecules are directed substantially parallel to the upper and lower substrates a-3, a-4, whereupon the light falling on the liquid crystal panel a is allowed to pass therethrough and reach the photosensitive drum B (Fig. 1).

Figs. 5(a) and 5(b) show the waveforms of signals applied to the liquid crystal panel when the latter is driven at 1/2 duty cycle. Designated at COM-1, COM-2 are scanning signals applied to the scanning electrodes, and $T_1$ is a single period, the scanning signals COM-1 and COM-2 being repeated at each repeated cycle $T_1$. $F_{on}$ is an applied high-frequency signal for opening the said light valves, $T_2$ being the time during which the light valves are open. $F_{off}$ is a low frequency signal for closing the light valves. The Line Start signal shown in Fig. 5(a) is a timing signal whose cycle is the same as the repeated cycle $T_1$.

The scanning signal COM-1 will first be described. During a first half period $T_2$, a high-frequency voltage having a peak value ranging from $+V_1$ to $-V_1$ is applied to select the scanning signal COM-1. During a next time interval $T_3$, a low-frequency voltage is applied and the scanning signal COM-1 is not selected. a low-frequency voltage having a peak value of $+V_1$ - $-V_1$ is also applied during a next half period ($T_4$ + $T_5$) and the scanning signal COM-1 is not selected. For the scanning signal COM-2, it is not selected during a first half period ($T_2$ + $T_3$) in which a low-frequency voltage with a peak value of from $+V_1$ to $-V_1$ is applied. During a latter half period $T_4$, a high-frequency voltage having a peak value of $+V_1$ - $-V_1$ is applied, and the scanning signal COM-2 is selected.

More specifically, the COM-1 line is selected for the interval of times $T_2$ within the period $T_1$, and the COM-2 line is selected for the time interval $T_4$ in the period $T_1$. No COM-1 and COM-2 lines are selected within the time intervals $T_3$, $T_5$. Experiments were conducted with the period $T_1$ being 2 ms, $T_2$ and $T_4$ 0.6 ms, and $T_3$ and $T_5$ 0.4 ms. The reason for imposing low-frequency voltages during the time intervals $T_3$, $T_4$ to close the liquid crystal shutter is to

gain a better effect.

Designated at Sall ON is the waveform of a voltage applied to the segments COM-1, COM-2 to light the crossing of the COM-1, COM-2 lines. More specifically, during the time interval $T_2$, a voltage is applied which has a peak value of from $+V_1$ to $-V_1$ and which is opposite in phase to the high-frequency voltage of the COM-1 and COM-2 signals. Indicated at COM-1 Sall ON is the waveform of a voltage applied to a liquid crystal at the crossing of the scanning electrode a-12 COM-1 and the signal electrode a-13 to which the Sall ON voltage is applied. To the liquid crystal at the above crossing is applied a high-frequency voltage having a peak value of from $2V_1$ to $-2V_1$ during the time interval of $T_2$, and the dielectric anisotropy $\Delta\varepsilon$ becomes negative and the longitudinal axes of the liquid crystal molecules are oriented parallel to the upper and lower substrates a-3, a-4, whereupon the light valve a-1 is open to allow the light falling on the crossing to be transmitted to the photosensitive drum B (Fig. 1). During the time interval $T_4$, a high-frequency voltage with a peak value of from $2V_1$ to 0 and a high-frequency voltage with a peak value of from 0 to $-2V_1$ are applied for cutting off light. As a whole, the light valves are open during the time interval $T_2$ to pass an energy of light large enough to expose the photosensitive drum B, whereupon a latent image corresponding positionally to the crossing in the liquid crystal panel is formed on the photosensitive drum B.

The composite waveform of a signal applied to the liquid crystal at the crossing of the scanning electrode a-12 COM-2 and the signal electrode a-13 to which the Sall ON voltage is applied is indicated by COM-2 Sall ON. During the former portion of the period $T_1$, that is, the scanning interval $T_2$ for the COM-1 electrode, the liquid crystal light valve is closed, and during the latter portion of the period $T_1$, that is, the scanning interval $T_4$ for the COM-2

electrode, the liquid crystal light valve is open. Therefore, during the time interval $T_4$ in which the COM-2 electrode is selected, the photosensitive drum B is irradiated through the liquid crystal valve a-1 with an optical energy large enough to form a latent image positionally corresponding to the above-mentioned crossing.

Briefly summarized, when the Sall ON signal is applied to the signal electrode, the light valve located at the crossing of the signal electrode and the scanning electrodes COM-1, COM-2 are open to allow passage therethrough of an optical energy sufficiently large for forming a latent image on the photosensitive drum.

A signal Sall OFF in Fig. 5(b) is applied to the signal electrode a-13 to close the light valve a-1 at the crossing of the scanning electrodes a-12 COM-1 and COM-2.

Designated at COM-1 Sall OFF is a composite signal waveform of the signals COM-1 and Sall OFF applied to the liquid crystal at the crossing of the scanning electrode a-12 and the signal electrode a-13 to which the signal Sall OFF is applied.

During the former portion of the period $T_1$, that is, the scanning interval $T_2$ for the COM-1 electrode, the light valve is closed. During the latter portion of the period $T_1$, that is, the scanning time $T_4$ for the COM-2 electrode, the composite waveform is of a low frequency having a peak value of from $2V_1$ to $-2V_1$. At this time, the dielectric anisotropy $\Delta\varepsilon$ is positive, and the liquid crystal molecules have their longitudinal axes extending substantially perpendicularly to the upper and lower substrates a-3, a-4 to thereby block passage of light. As a consequence, the light valve at the crossing of the scanning electrode COM-1 and the signal electrode to which the Sall OFF signal is applied is closed throughout the period $T_1$, with the result that no latent image is formed on the photosensitive drum at such crossing.

A composite signal waveform COM-2 Sall OFF in Fig. 5(b) is applied to the crossing of the scanning electrode a-12 COM-2 and the signal electrode a-13 on which the Sall OFF signal is imposed. As with the COM-1 Sall OFF signal, the signal COM-2 Sall OFF closes the light valve throughout the period $T_1$ preventing light from being transmitted onto the photosensitive drum. More specifically, when the signal Sall OFF is applied to the signal electrode a-13, the light valve a-1 at the crossing of this signal electrode a-13 and the scanning electrodes a-12 COM-1 and COM-2 is closed throughout the period $T_1$ and no optical energy reaches the photosensitive drum.

Fig. 5(b) also shows a signal $S_1$ for driving the signal electrodes a-13. A composite signal waveform COM-1 $S_1$ is applied to the liquid crystal at the crossing of the scanning electrode COM-1 and the signal electrode to which the signal $S_1$ is applied, and a composite signal waveform COM-2 $S_1$ is applied to the liquid crystal at the crossing of the scanning electrode a-12 COM-2 and the signal electrode a-13 to which the signal $S_1$ is applied. Study of these composite signal waveforms indicates that the light valve at the crossing of the signal electrode a-13 to which the signal $S_1$ is applied and the scanning electrode a-12 COM-1 is open to permit passage of light, and the light valve a-1 at the crossing of the signal electrode a-13 and the scanning electrode a-12 COM-2 is closed to prevent light from passing therethrough.

Fig. 5(b) also shows a signal $S_2$ for driving the signal electrodes a-13. A composite signal waveform COM-1 $S_2$ is applied to the liquid crystal at the crossing of the scanning electrode a-12 COM-1 and the signal electrode a-13 to which the signal $S_2$ is applied, and a composite signal waveform COM-2 $S_2$ is applied to the liquid crystal at the crossing of the scanning electrode a-12 COM-2 and the signal electrode a-13 to which the signal $S_2$ is applied. Study of

these composite signal waveforms indicates that the light valve, at the crossing of the signal eletrode a-13 to which the signal $S_2$ is applied and the scanning electrode a-12 COM-1, is open to permit passage of light, and the light valve a-1, at the crossing of the signal electrode a-13 and the scanning electrode a-12 COM-2, is closed to prevent light from passing therethrough.

The peak value $V_1$ is in the range of from a few volts to a few tens of volts. A prototype of the apparatus according to the present invention was designed to be driven by signals having a peak value $V_1$ of 30V. The low-frequency signal had a frequency of a few hundreds Hz, and the high-frequency signal had a frequency of from a few tens to a few hundreds KHz. The frequency in the prototype was 130 KHz. The liquid crystal panel operates in the rise and fall times of 0.1 to 0.5 ms and the period $T_1$ is a few ms. The period $T_1$ was 2 ms in the prototype.

With the apparatus of the invention thus driven at 1/2 duty cycle, the drivers b (Fig. 2) may be half as many as those which would be statically driven.

Since the peak value is a few tens V, the drivers can be fabricated on a highly integrated MOS circuit such as CMOS, PMOS, or NMOS at a reduced cost.

The number of power supply levels in the power supply may only be two by equalizing high- and low-frequency voltages as in the embodiment of the present invention.

## Driver

2,000 microshutters were fabricated on the liquid crystal panel and arranged at a pitch of 100 microns in a straight array for the length of 20 cm. Integrated driver circuits were prepared for opening and closing the microshutters in response to time-series picture element data, and were mounted on the liquid crystal panel. Since a single integrated driver circuit has fifty output drivers, a total of forty integrated driver circuits were disposed with twenty circuits located on each side of the liquid crystal panel.

Fig. 6(a) is a timing chart for various signal waveforms

required to drive the integrated driver circuit, and Fig. 6(b) is a block diagram of a circuit for generating such signal waveforms, Fig. 6 illustrating the case of static driving. Designated at 1001 is a reset signal for starting operation, 1002 a line start signal indicative of the beginning of data for one line, and 1003 a request clock requesting data, the clock being composed of 2,000 pulses for one line in synchronism with the line start signal. Data is received in synchronism with the clock signal. Also indicated at 1004 is a shift clock for transferring data from a shift register in the integrated driver circuit. 1005 indicates latch pulses for latching data immediately after data has been transferred and 1006, 1007, 1008 indicate driving waveforms to be applied to the liquid crystal panel, the waveform 1008 being a common electrode signal. When the signal 1006 is ON, the liquid crystal microshutters are closed. The ON signals and common electrode signal are composed of a combination of a high frequency fh and a low frequency fl and are inverted in phase with respect to each other. The OFF signal has a low frequency in phase with the frequency fl of the ON signals. A time interval of the high frequency fh in one period of the ON signals is called an opening interval.

A circuit arrangement for generating such signals will now be described with reference to Fig. 6(b). A fundamental clock signal 1010 of 4.2 MHz is frequency-divided by a divider 1011 to produce a variety of signal waveforms. A signal generator 1015 generates a line start signal having a period of 2ms for synchronizing all other signals. A counter 1012 counts 2,000 pulses, and a request clock generator 1020 produces a request clock pulse which is supplied to an external time-series picture element signal generator 1024, to which the line start signal is also delivered. Data is supplied from the picture element generator 1024 in synchronism with the request clock to a motor distributor 1019, from which the data is fed to an interdigital integrated driver circuit 1022.

An opening time is determined by an opening time control 1016, and the ON, OFF and common electrode signals are produced by a signal generator 1017 and delivered to the integrated driver circuit 1022. A pulse generator 1013 generates latch pulses, and a clock generator 1014 generates a shift clock, these pulse and clock signals being fed to the integrated driver circuit 1022. The common electrode signal is changed to 30V in an output buffer 1018 and is applied to a common electrode 1023. A control 1021 is receptive of a reset signal fed from the picture element generator 1024 for starting and stopping operation of various parts.

Fig. 6(c) is a block diagram of a shift register 1030 of a less costly arrangement for driving the signal electrodes of the liquid crystal panel, the shift register 1030 having N bits. Although the number N should preferably be large, it is a few tens in practical applications. A signal for driving the signal electrodes is supplied to an input DIN, and the data from the input DIN is transferred through a shift register by a shift clock S.C. After the data has been transferred, the data is latched in a latch 1031 by a LATCH signal. A select gate 1032 serves to select lighting or non-lighting dependent on the data latched. The data is then converted by a level interface 1033 into a drive signal $Vss_2$ to drive an N-bit driver 1034 for driving the liquid crystal panel. A single such integrated driver circuit can drive N signal electrodes. One driver IC can drive N signal electrodes for static driving, and can drive 2N signal electrodes for 1/2 duty cycle driving. The driver may be composed of an integrated circuit of TTC, $I^2L$ or a MOS-type integrated circuit of EDMOS, CMOS, PMOS, NMOS or the like.

With the N-bit driver thus constructed, the printing apparatus according to the present invention is small in size and less costly as the driver can be mounted easily and is of an IC construction. The driver can be interfaced easily to facilitate opening and closing of the light valves in response to external signals.

## Light source

The lamp k (Fig. 2) in the printing apparatus according to the present invention may be a tungsten lamp, xenon lamp, or a halogen lamp, but is preferably a fluorescent lamp. Fig. 7(a) shows a fluorescent lamp used as the lamp k (Fig. 2) in the printing apparatus A (Fig. 1). The fluorescent lamp includes a glass tube k-1 having therein a reflecting layer k-3 with a light discharge aperture k-2 and a layer k-4 of fluorescent material deposited on an inner surface of the reflecting layer k-3. Light emitted from the fluorescent material layer k-4 is reflected by the reflecting layer k-3 and passes through the aperture k-2 opened to illuminate the light valves a-1 (Fig. 3) of the liquid crystal panel a (Fig. 2). The fluorescent lamp k with the aperture k-2 can transmit intensive light to the photosensitive drum B (Fig. 1) effectively.

Fig. 7(b) is a graph which shows a wavelength characteristic of a fluorescent material k-4 used in an Example according to the present invention, the graph having an ordinate representative of relative energy of the fluorescent material k-4 and an abscissa representative of wavelengths. The fluorescent material should have wavelengths matching those of a photosensitive material on the photosensitive drum B (Fig. 1), relative light discharge enery in a certain wavelength range, a reduced half-valve width, a high brightness, and a high longevity, the preferred material used being $BaMgAl_{11}O_{14}FeMu$. The fluorescent material may have several wavelength peaksone of which is highest and sensed by the photosensitive material of the photosensitive drum B (Fig. 1), the others being negligible.

Where the fluorescent lamp constructed as shown in Fig. 7(a) and the fluorescent material described with reference to Fig. 7(b) are employed, the signal-to-noise ratio of printing is high so as to make it suitable for printing clear copies.

## Driving of the lamp

Fig. 7(c) shows the relationship between the temperature of the lamp tube wall and relative brightness. The brightness of the fluorescent lamp is at a maximum when the temperature of the lamp tube wall ranges from 35°C to 45°C. The temperature sensor t (Fig. 2(b)) is attached to the lamp tube wall to detect the temperature thereof at all times for feedback control of the lamp driving system p (Fig. 2(b)) to maintain the lamp brightness constant at all times.

The lamp driving system p is coupled to the fan r (Fig. 2(b)) for supplying air from outside of the printing apparatus into the frame n (Fig. 2(c)) through the heater s (Fig. 2(b) an arrangement which is effective in keeping the lamp tube wall at a constant temperature at all times. The lamp tube is filled with an excess amount of mercury to compensate for a reduction in the mercury vapor pressure due to reaction between the mercury and materials in the lamp tube. Such mercury tends to be deposited in the aperture k-2 (Fig. 7(a)) which can be cooled easily, thereby reducing a light emission output. However, the fan r (Fig. 2(b)) can deliver air into the frame n to prevent the aperture k-2 (Fig. 7(a)) from being more cooled than the other tube portions and hence prevent mercury from being deposited in the aperture k-2. Accordingly, any reduction in the light emission is held to a minimum.

## Self-focusing lens array

The self-focusing lens array m (Fig. 2(b)) is located below the liquid crystal panel a of the printing apparatus according to the present invention to effect self-focusing of incident light passing through the light valves a-1. An example of self-focusing lenses is glass fibres for focusing light rays having the commercial name of Selfoc Lens Array (manufactured by Nihon Ita Garasu K.K.)

Fig. 8 illustrates such a self-focusing lens array m which may be employed in the printing apparatus of the present invention. The

self-focusing lens array m comprises FRP side plates m-2, self-focusing lenses m-1 which are sandwiched betwenn the side plates m-2 and which are constituted by glass fibres, and a mass of black silicone resin m-3 filled in the spaces or gaps between the side plates and lenses. The self-focusing lenses m-1 are substantially cylindrical in shape and have respective optical axes aligned in 1 to 1 correspondence with those of the light valves a-1 (Fig. 3) of the liquid crystal panel a (Fig. 2). Each self-focusing lens m-1 has a cross-sectional area normal to its optical axis and approximately equal to the area of a corresponding one of the light valves a-1 of the liquid crystal panel. The self-focusing lenses are small in size as they are about a few millimetres to a few centimetres long parallel to the optical axes thereof. The optical fibres of the self-focusing lenses have a self-focusing capability with a graded refractive index such that a beam of light entering an end of the self-focusing lens travels along a zig-zag path around the optical axis. Thus, the glass fibres per se are equivalent in function to a lens. The self-focusing lens array m which may be employed in the present invention is composed of lenses of such characteristics put together and aligned in 1 to 1 correspondence with the small windows or light valves of the liquid crystal panel. The overall height of the self-focusing lens array is in the range of from a few millimeters to a few centimeters, and the length and width thereof are at least equal to the length and width of an area in which the light valves a-1 (Fig. 3) of the liquid crystal panel are arranged.

## Advantages of the self-focusing lens array

Use of the self-focusing lens array makes it possible to focus a non-magnified image on the photosensitive drum B (Fig. 2). A conventional spherical lens used in a copying machine has a resolving power which is poorer in its peripheral portion than in its central portion, and is large as it is spherical in shape to reduce an amount

of light transmission at its periphery. Since the distance between the object and the image plane ranges from 600 mm to 1,200 mm, such a prior copying machine has been large. Its optical system is complex because of a mirror, a frame and the like required and thus is costly. The self-focusing lens array used in the printing apparatus described above, however, has a resolving power uniform throughout its width and passes an amount of light uniformly across the width thereof. The self-focusing lens array is rectangular in shape, and is small and lightweight. The distance between the object and the image plane is small as it is 60 to 80 mm, the optical system is simple, compact and less costly.

## Heater

The heater f (Fig. 2(b)) for keeping constant the temperature of the liquid crystal panel a in the printing apparatus A (Fig. 1) will now be described.in detail.

Fig. 9 is schematically illustrative of the heater f as it is attached to the liquid crystal panel a. The heater comprises a metal plate f-1 such as of Al, Fe, Cu or the like and a support f-3 having a resistor f-2, the metal plate f-1 being mounted on the liquid crystal panel a by a suitable fastening means f-4 such as an adhesive, a double-sided adhesive tape or the like. The resistor f-2 is formed by depositing a layer of carbon, silver of the like on the support f-3 in the form of a sheet of glass or metal such as Al, Fe, Cu or the like by way of dipping, screen process printing, spraying, or brushing for example. The heater f generates Joule heat when an electric current passes through the resistor f-2. The resistor f-2 is commercially available as a conductive or resistive paste. The resistor f-2 has a constant layer thickness and width such that its resistance is constant throughout. Heat generated when an electric current is passed through the resistor f-2 is detected by a temperature detection means such as a thermistor, and a detected signal is

delivered to the heater controller g (Fig. 2(b)) which controls the heater f in a feedback control system to maintain the heater f at a constant temperature. A temperature detection means f-5 is affixed to the metal plate f-1 or to the resistive layer f-2 by an adhesive or a double-sided adhesive tape.

The liquid crystal becomes more viscous and slower in response when the temperature is too low. When the temperature is too high, on the other hand, the liquid crystal becomes isotropic. When a constant voltage is applied to open and close the liquid crystal light valves a-1 (Fig. 3), the latter should be driven while being kept within a certain temperature range. The heater serves to maintain the liquid crystal panel in an optimum temperature range for the driving of the liquid crystal panel. The heater also serves to prevent the light transmittance of the liquid crystal panel from varying and hence to prevent a latent image on the photosensitive drum from being subjected to different densities and line thicknesses due to a temperature change of the liquid crystal panel a (Fig. 2).

## Assembling procedure

Assembling of the printing apparatus A (Fig. 1) of the present invention will now be described. Figs. 10(a) to 10(i) are illustrative of an assembling procedure for the printing apparatus of the invention.

A mask pattern is prepared in the shape of leads of a liquid crystal driver as shown in Fig. 10(a). A mask z-1 and a mask fixture jig z-2, and driver mount substrates d positioned on a guide plate z-3 by guide pins z-4 which are positioned in mutual alignment, and a cream of solder z-6 is printed on the substrate by a squeezee z-5. The cream of solder z-6 is composed of small balls of solder and an amount of flux which are mixed together to provide a suitable degree of viscosity.

Then, as shown in Fig. 10(c), the driver ICs b (Fig. 2) are

placed on the liquid crystal driver substrate d with the creams of solder z-6 printed thereon, the driver ICs b being generally of the flat package type. The flat package ICs are advantageous in that the number of drivers corresponding to dots is larger the higher the printing density and the more the number of dots printed in a single printing operation, and the overall size of the printing apparatus according to the present invention therefore is reduced. With the ICs b mounted on the substrate d as illustrated in Fig. 10(c), the substrate d, solder creams z-6, and the leads of the ICs b are placed one on the other in the order named in regions where the ICs b are to be soldered to the substrate d.

As illustrated in Fig. 10(d), the substrates d on which the ICs b are mounted are placed in a far-infrared furnace z-11 having a preheater z-12 and a far-infrared heater z-13. Fig. 10(e) shows a temperature distribution effected by the far-infrared furnace z-11. The substrate d passes through the preheater z-12 which preheats the substrate d to a temperature ranging from 130°C to 200°C, and then is heated by the far-infrared heater z-13 which irradiates the substrate d with far-infrared radiation to melt the solder in the solder creams z-6 at a high temperature of more than 200°C for thereby soldering the ICs b to the substrate d.

By thus printing the solder creams z-6 on the substrate d and then soldering the flat package ICs b to the substrate d in the far-infrared furnace z-11, the ICs b can be soldered to the substrate d in a much smaller number of steps than an ordinary soldering process using a soldering iron, The more there are flat package ICs b placed on the substrate d, the more advantageous is the soldering process according to the present invention as compared with the normal soldering procedure using a soldering iron.

Fig. 10(f) is illustrative of the manner in which the substrates

d to which the ICs are soldered is cleaned. The substrates d are hung from a hanger z-21 and dipped into a cleaning solution z-22 containing an alcohol such as Freon, Dichlone, or isopropyl alcohol. Ultrasonic enery is imparted to the cleaning solution z-22 by an ultrasonic generator z-23. The substrates d can be more thoroughly cleaned in a shorter period of time by the ultrasonic energy. Since the liquid crystal in the printing apparatus according to the present invention is driven at both low and high frequencies, it would tend to cause current leakage between the leads and in the power supply if there were a small amount of dirt attached to the liquid crystal driver. The cleaning process, however, removes away any dirt completely to increase the reliability of the liquid crystal.

Fig. 10(g) shows the way in which flexible substrates x are soldered to the upper side of the liquid crystal driver mount substrate d to electrically connect the latter to the liquid crystal panel a. Although this is not shown in Fig. 10(g), a plurality of flexible substrates x are soldered alternately to the top and bottom surfaces of the driver substrate d. The flexible substrates x are divided and severed for a suitable number of connector wires and are placed on a guide plate z-31. Then, the driver substrate d and the flexible substrates x are positioned by the guideplate z-31 as shown in Fig. 10 (g). A thermal presser z-32, which is appropriately heated for enabling soldering to be effected, is pressed against the junctions between the driver substrate d and the flexible substrates x to solder them. These junctions should preferably be plated with solder in advance for easy soldering thereof. The flexible substrates x are preferably a few centimetres long. If they were too short, it would be necessary to provide too many flexible substrates x. If, however, they were too long, then the flexible substrates x would not have small dimensional tolerances and this would make it difficult to connect them to the driver substrate d.

The liquid crystal panel a and the driver substrate d are

soldered together as shown in Fig. 10(h) which shows how the flexible substrates x are soldered to the bottom side of the driver substrate d. The liquid crystal panel a and the driver substrate d to which the flexible substrates x are soldered are guided on a guide plate z-41 so that the junctions of the flexible substrates x to the liquid crystal panel a are positioned in 1 to 1 correspondence to the terminals of the liquid crystal panel a. These junctions are thermally pressed by a thermal presser z-42 which is appropriately heated to solder the flexible substrates x to the liquid crystal panel a. The junctions of the flexible substrates x should be plated with solder, and the terminals of the liquid crystal panel a should be composed of transparent electrode terminals plated with a metal such as Ni and coated with a layer of solder, or coated directly with a layer of solder. With such an arrangement, the junctions and terminals can easily be soldered with the same soldering material by the thermal presser z-42. The metal layer, e.g. of Ni, on the transparent electrode terminals can be coated with a layer of solder by plating with solder, by printing solder creams, or by applying drops of heated and melted solder to the metal layer.

In the foregoing process, the liquid crystal panel a and the driver substrate d are soldered to each other through the flexible substrates x for electrical and mechanical connection.

Thereafter, the connected assembly is ultrasonically cleaned in a cleaning solution as of Freon to remove flux and other dirt in a process similar to that shown in Fig. 10(f).

Then, the driver substrate d, the flexible substrates x and the liquid crystal panel a which are assembled together are dipped in a tank filled with silicone, epoxy resin and the like to coat the assembly to render the latter moisture-resistant. The coating prevents any dirt from being deposited on the driver substrate d, thus protecting the assembly against shortcircuiting and current

leakage. Although the liquid crystal panel a is driven by the driver b at a high frequency at a voltage higher than ordinary desk-top calculators or watches that are driven at a few tens of volts, electric leakage and shortcircuiting can be prevented by the coating even in a highly humid atmosphere as during the Japanese rainy season, with the result that the assembly is highly reliable in operation. The moisture-resistant coating can be applied to the driver substrate d only with advantage. The coating may also be applied as by spraying, brushing or other processes.

Fig. 10(i) shows soldered junctions z-52 of the driver substrate d, and shows the flexible substrates x and liquid crystal panel a which are assembled together, the junctions z-52 being coated with reinforcing agents z-51 which may be composed of epoxy adhesive, urethane adhesive, silicone adhesive or the like. The reinforcing agents z-51 cover portions of both the flexible substrates x and the driver substrate d at the junctions z-52 therebetween. The reinforcing agents z-51 also cover portions of both of the liquid crystal panel a and the flexible substrates x at the junctions therebetween. Thus, the reinforcing agents z-51 bond the driver substrate d, the flexible substrates x and the liquid crystal panel a with increased bonding strength. A certain degree of mechancial strength can be attained by solders z-52 of the connections between the flexible substrates x and the driver substrate d and between the flexible substrates x and the liquid crystal panel a. With the reinforcing agents z-51 added, the driver substrate d, the flexible substrates x and the liquid crystal panel a are connected with an increased degree of strength. The reinforcing agents z-51 also serve to prevent dirt and water from entering the junctions and thus from deteriorating the solder, with the result that the driver substrate d, the flexible substrates x and the liquid crystal panel a are interconnected highly reliably.

Other structural characteristics

The frame n of the printing apparatus as shown in Fig. 2 is made of a metal such as stainless steel or of aluminium or plastics and serves to unitize the printing apparatus. The frame n has vertical vertical and horizontal dimensions ranging from a few centimetres to a few tens of centimetres and a width that is substantially equal to the width across which printing can be effected on a recording paper (not shown). The frame n may be smaller in size. The frame n also acts as an element for blocking passage of light and for this reason is painted black. This arrangement prevents the photosensitive drum B (Fig. 1) from being subjected to unwanted exposure. The frame n has an air inlet for supplying air to the motor fan from the exterior of the printing system, and an air outlet for discharging air from the motor fan. An air flow caused by the motor fan can properly adjust the temperature of the lamp k, the liquid crystal panel a and other components. Introduction of ambient air allows the temperature to rise in the printing apparatus so as to prevent the light source from being cooled and also to prevent toner from entering the printing apparatus.

The shield plate o in Fig. 2 has an opening substantially equal in size to or slightly larger than the light valve portion of the liquid crystal panel a to permit light emitted from the lamp k to irradiate the light valves of the liquid crystal panel a. The shield plate o is made of a metal such as iron, stainless steel or aluminium, or plastics, but should preferably be made of a metal as the latter is less thermally deformable.

The shield plate o serves to protect the liquid crystal panel a against direct contact with heated air flowing from the lamp k and thus against an excessive temperature rise of the liquid crystal panel a, and also to prevent the polarizers from being deformed and and deteriorated. In addition, the shield plate o prevents the

drivers b from malfunctioning and deteriorating due to an excessive temperature rise thereof.

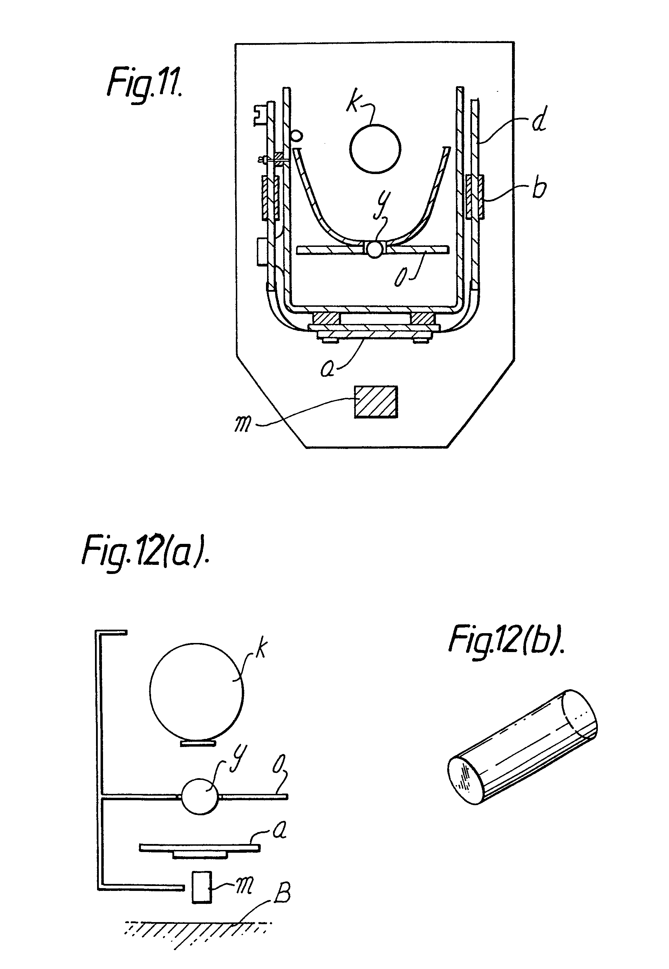

Fig. 11 shows a printing apparatus according to a second embodiment of the present invention. The printing apparatus of Fig. 11 is different from the printing apparatus of Fig. 2 in that a rod lens y is added to the apparatus. The other components are entirely the same as those shown in Fig. 2, are denoted by the same reference characters, and will not be described again.

Fig. 12(a) schematically illustrates a relationship between optical axes of components where the rod lens y in the printing apparatus of Fig. 11 is employed. As shown in Fig. 12, the lamp k, the rod lens y, the liquid crystal panel a and the self-focusing lens array m are arranged with their optical axes aligned. The upper and lower polarizers are disposed upwardly and downwardly of the liquid crystal panel a. Light radiated from the lamp k is focused by the rod lens y onto the light valves of the liquid crystal panel a, and only a necessary beam of light is transmitted through the light valves and focused by the self-focusing lens array m onto the surface of the photosensitive drum B.

Fig. 12(b) is a perspective view of the rod lens y. As shown, the rod lens y is in the shape of a cylindrical rod and is made of glass or plastics resin such as acrylic resin or styrene resin.

When the rod lens y is used, the wall of the tube of the fluorescent lamp k is maintained at a few tens of degrees Celsius, for example, to eliminate the problems of burning-out or deterioration of the polarizers and deterioration of the liquid crystal panel a which would otherwise take place if it were not for the provision of the rod lens y.

The rod lens y is also advantageous in that the liquid crystal panel a is kept under temperature control by the heater f (Fig. 2)

attached to the liquid crystal panel a, which temperature control would be lost if the liquid crystal panel a were adversely affected by a temperature rise of the tube wall of the lamp k, and the rod lens y prevents the panel a from having different temperatures on its upper and lower sides.

## Printing

The printing operation of the printing apparatus will now briefly be described. An example will be described in which two rows of light valves are spaced 250 microns apart from each other in the printing apparatus which is driven at a 1/2 duty cycle with a period $T_1$ being 2 ms. The photosensitive drum was rotated to advance a distance of 100 microns per period of 2 ms. A width of 5 cm (100 microns x (1,000 ms / 2 ms) = 50,000 microns) was printed per second.

## Advantages of the printing system using the printing apparatus of the invention

The printing system using the printing apparatus according to the present invention has a paper travelling system which is essentially composed of a photosensitive system, a developing system and a fixing system, and does not produce noise which would be generated by impact printers and the like. The printing system is inexpensive as it does not employ a high-speed precision optical scanning system which would be incorporated in a laser printer. Latent images can be formed by turning the light valves on and off. Thus, the printing system is driven by a lower voltage than the voltage required by the laser printers. The printing system utilizes light which is safe, as it is of a lower energy intensity than that of laser beams.

The printing apparatus according to the present invention can replace the optical writing unit in conventional expensive laser printing systems, printing systems using OFF, and multi-stylus charge printing systems, with conventional developing, fixing, discharging,

and charging units that are technically stable and inexpensive, being usable as they are. Since the self-focusing lens array is used for writing, the printing apparatus and hence the printing system as a whole can be small and lightweight, and printed records suffer from no distortions and deformations. Furthermore, the interface used is comprised of simple liquid crystal drivable by drive signals for writing, and thus can be controlled with ease and manufactured at less cost. The accuracy of printing can be changed as desired by varying the pitch and size of patterns of liquid crystal light valves. The patterns of liquid crystal light valves can be fabricated with dimensions of the order of microns, so that the printing apparatus of the present invention can print in a much higher resolution than can be effected with conventional printing apparatus. The printing apparatus of the present invention may employ a liquid crystal panel having a response time expressed in figures about two digits faster than those of the response time of the prior liquid crystals, resulting in an ability to print at a much higher speed. The liquid crystal valves may be arranged in a single or a few rows. The single or few rows can be opened or closed at a speed suitable for high-speed printing operation.

As described above, the printing apparatus according to the present invention can utilize processes and components for developing, fixing, discharging, and charging units of prior printing apparatus. Inexpensive and high-speed printing systems can be reduced to practice simply by replacing printing units in such conventional printing apparatus with printing units according to the present invention.

CLAIMS

1. A liquid crystal optical printing apparatus comprising a light source (k), a liquid crystal panel (a) which is arranged to be irradiated with light which is emitted from said light source (k) and which is provided with a plurality of light valves (a-1), and means (b) for selectively opening and closing said light valves (a-1) characterised in that the liquid crystal panel (a) is provided with nematic liquid crystal material whose dielectric anisotropy can be inverted in dependence upon the frequency, the driver means (b) being arranged to drive said liquid crystal panel (a) at higher and lower frequencies respectively to control the orientation of the molecules of the liquid crystal material so as to control the transmission and blocking of light through the liquid crystal panel (a).

2. A liquid crystal optical printing apparatus as claimed in claim 1 characterised by optical fibres (m-1) which are arranged to effect self-focussing of incident light passing through the light valves (a-1).

3. A liquid crystal optical printing apparatus as claimed in claim 1 or 2 characterised by a light shield (o) having a light outlet for shielding the liquid crystal panel (a) from light and / or heat transmitted from said light source (k) otherwise than through the light outlet, the driver means (b) being disposed externally of said light shield (o).

4. A liquid crystal optical printing apparatus according to any preceding claim characterised by a feedback system comprising a light source heater (s) for heating air; a motor fan (r) for supplying air heated by said light source heater (s) to heat said light source (k); a temperature sensor (t) for sensing the temperature of a part of said light source (k); and a temperature controller (u) connected to said light source heater (s), said motor fan (r), and said temperature sensor (t) for maintaining the said

part of said light source (k) at a substantially constant temperature.

5. A liquid crystal optical printing apparatus according to claim 4 characterised in that the temperature controller (u) is arranged to control the temperature of the wall of the light source (k) to be in the range of from $35^{0}$C to $45^{0}$C.

6. A liquid crystal optical printing apparatus according to any preceding claim characterised by a feedback system comprising a brightness sensor (q) for detecting the brightness of said light source (k), a drive unit (p) for driving said light source (k) and a brightness sensor controller (v) connected to said brightness sensor (q) and to said drive unit (p).

7. A liquid crystal optical printing apparatus according to any preceding claim characterised in that said light source (k) has a reflective layer (k-3) except in a light emitting area (k-2), and a layer (k-4) of fluorescent material deposited on an inner surface of said reflective layer (k-3).

8. A liquid crystal optical printing apparatus according to any preceding claim including a feedback system comprising a panel heater (f) attached to said liquid crystal panel (a) for heating the latter, a sensor (h) for detecting the temperature of said liquid crystal panel (a), and a heater controller (g) connected to said panel heater (f) and the last-mentioned sensor (h).

9. A liquid crystal optical printing apparatus according to claim 8 characterised in that said panel heater (f) comprises a support body (f-3) and a resistive layer (f-2) deposited on said support body (f-3) for heating said liquid crystal panel (a) with Joule heat generated by said resistive layer (f-2).

10. A liquid crystal optical printing apparatus according to claim 2 characterised in that said fibres (m-1) are joined into a unitary array (m).

11. A liquid crystal optical printing apparatus according to any preceding claim characterised by a driver substrate (d) for driving said liquid crystal panel (a), and a flexible substrate (x), said

driver substrate (d) and said liquid crystal panel (a) being interconnected by soldering through said flexible substrate (x).

12. A liquid crystal optical printing apparatus according to claim 11 characterised in that there are soldered junctions (z-52) between said flexible substrate and said liquid crystal panel, and between said flexible substrate (x) and said driver substrate (d), at least one of which soldered junctions (z-52) is reinforced with a reinforcing agent (z-51).

13. A liquid crystal optical printing apparatus according to claim 11 or 12 characterised in that said junctions are soldered thermally under pressure.

14. A liquid crystal optical printing apparatus according to any of claims 11-13 characterised in that at least said driver substrate (d) is covered with a moisture-resistant coating.

15. A liquid crystal optical printing apparatus as claimed in any preceding claim characterised by a rod lens (y) disposed between said light source (k) and said liquid crystal panel (a) for focusing light from said light source onto the liquid crystal panel (a).

16. A liquid crystal optical printing apparatus as claimed in any preceding claim characterised in that the liquid crystal panel (a) is composed of a pair of substrates (a-3, a-4) and a liquid crystal material (a-2) sealed between said substrates (a-3, a-4), said liquid crystal material (a-2) being of a nematic structure having a dielectric anisotropy which becomes zero at a crossover frequency, said liquid crystal material (a-2) having molecules disposed at wall surfaces of said substrates (a-3, a-4) and oriented parallel to the substrates, said liquid crystal molecules being twisted between said substrates, and polarizers disposed on opposite sides respectively of said liquid crystal panel (a), said liquid crystal material (a-2) being arranged to be subjected to an applied electric field having

a drive frequency lower than said crossover frequency and an applied electric field having a drive frequency higher than said crossover frequency to control orientation of the liquid crystal molecules for transmitting and blocking light through said liquid crystal panel (a).

17. A liquid crystal optical printing apparatus as claimed in claim 16 characterised in that the dielectric anisotropy is positive at a drive frequency lower than said crossover frequency, and is negative at a drive frequency higher than said crossover frequency.

18. A liquid crystal optical printing apparatus as claimed in claim 16 or 17 characterised in that the liquid crystal molecules are twisted through substantially $450^0$ between said substrates (a-3, a-4).

19. A liquid crystal optical printing apparatus according to any of claims 16-18 characterised in that said liquid crystal panel (a) includes a liquid crystal sealing portion having layers (a-11) of $SiO_2$ on said substrates (a-3, a-4), a transparent electrode layer (a-12, a-13) on each of said layers (a-11) of $SiO_2$, a metal layer (a-14) deposited on said transparent electrode layers (a-12, a-13) and extending from a terminal portion of said liquid crystal panel (a) to a position adjacent to a light valve, a layer (a-16) of $SiO_2$ deposited on said metal layer (a-14), a layer (a-17) of orienting agent deposited on said last-mentioned layer (a-16) of $SiO_2$, said liquid crystal panel also including a terminal portion having a layer $SiO_2$ on each of said substrates, and a metal layer deposited on said last-mentioned layer of $SiO_2$.

20. A liquid crystal optical printing apparatus according to any of claims 16-19 characterised in that said transparent electrode layers (a-12, a-13) include signal transparent electrodes (a-13) and scanning transparent electrodes (a-12) said signal transparent electrodes (a-13) having metal layers (a-14) extending from the terminal portion to the portion adjacent to the light valves (a-1),

and said scanning transparent electrodes (a-12) having metal layers (a-14) deposited except for the light valves (a-1).

21. A liquid crystal optical printing apparatus according to any of claims 16-20 characterised in that said polarizers have axes of polarization extending at substantially $90^0$ to each other, said liquid crystal molecules being orientable perpendicularly to said substrates when said liquid crystal panel (a) is driven at a frequency to block light, and orientable parallel to said substrates when said liquid crystal panel (a) is driven at a frequency to transmit light.

22. A liquid crystal optical printing apparatus according to any preceding claim characterised in that said liquid crystal panel (a) is drivable by a liquid crystal drive waveform applied to scanning electrodes, said liquid crystal drive waveform having a period including a selected interval and a nonselected interval.

23. A liquid crystal optical printing apparatus according to claim 16 and claim 22 characterised in that a frequency higher than said crossover frequency is applied during said selected interval and a frequency lower than said crossover frequency is applied during said nonselected interval.

24. A liquid crystal optical printing apparatus according to claim 22 or 23 characterised in that said liquid crystal panel (a) is drivable in a multiplex mode at a frequency having a period divided into n equal portions from the selected interval for the first scanning electrode to the selected interval for the nth scanning electrode, said selected interval being divided into selected and nonselected portions.

25. A liquid crystal optical printing apparatus according to claim 24 characterised in that n is 2.

26. A liquid crystal optical printing apparatus according to any of claims 1-21 characterised in that said liquid crystal panel is drivable by a liquid crystal drive waveform applied to scanning electrodes and having a first voltage amplitude and by a liquid

crystal drive waveform applied to signal electrodes and having a second voltage amplitude, said first and second voltage amplitudes being equal to each other.

27. A liquid crystal optical printing apparatus according to any of claims 16-26 characterised in that said liquid crystal molecules are orientable parallel to said substrates (a-3, a-4) when a high-frequency voltage in the range of from +Vo to -Vo (Vo ≠ 0) is applied to the liquid crystal panel (a) with a desired potential being a reference, and said liquid crystal molecules are orientable perpendicularly to said substrates (a-3, a-4) when a low-frequency voltage in the range of from +Vo to -Vo, or a high-frequency voltage in the range of from +2Vo to 0 or from 0 to -2Vo, is applied to said liquid crystal panel (a).

28. A liquid crystal optical printing apparatus according to claim 27 characterised in that light is allowed to pass through said liquid crystal panel (a) when said liquid crystal molecules are oriented parallel to said substrates (a-3, a-4), light being prevented from passing through said liquid crystal panel (a) when said liquid crystal molecules are oriented perpendicularly to said substrates (a-3, a-4)

29. A liquid crystal optical printing apparatus comprising a light source (k), a liquid crystal panel (a) which is arranged to be irradiated with light which is emitted from said light source (k) and which is provided with a plurality of light valves (a-1), means (b) for selectively opening and closing said light valves (a-1), and a light shield (o) having a light outlet for shielding the liquid crystal panel (a) from light and/or heat transmitted from said light source (k) otherwise than through the light outlet characterised in that the means for selectively opening and closing the light valves (a-1) comprises driver means (b) disposed externally of said light shield (o), optical fibres (m-1) being employed to effect self-focusing of incident light passing through

the light valves (a-1); the light source (k), light outlet, liquid crystal panel (a) and optical fibres (m-1) being arranged in a rectilineal arrangement.

30. A liquid crystal optical printing apparatus comprising a liquid crystal cell composed of a pair of substrates and a liquid crystal material sealed between said substrates, said liquid crystal material being of a nematic structure having a dielectric anisotropy which becomes zero at a crossover frequency, is positive at a drive frequency lower than said crossover frequency, and is negative at a drive frequency higher than said crossover frequency, said liquid crystal material having molecules disposed at wall surfaces of said substrates and oriented parallel to the substrates, said liquid crystal molecules being twisted through $450^{\circ}$ between said substrates by being oriented and by an optically active agent added to said liquid crystal material, and polarizers disposed upwardly and downwardly of said liquid crystal cell, said liquid crystal material being subjected to an applied electric field having said drive frequency lower than said crossover frequency and an applied electric field having a drive frequency higher than said crossover frequency to control orientation of the liquid crystal molecules for transmitting and blocking light through said liquid crystal cell.

Fig.1.

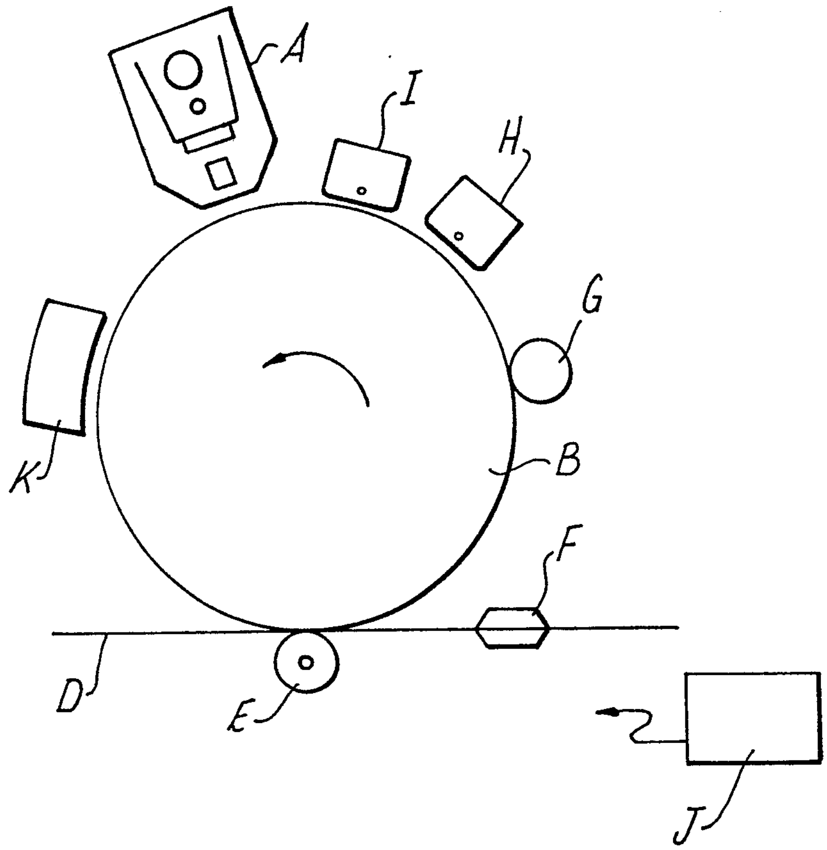


Fig.5(a).

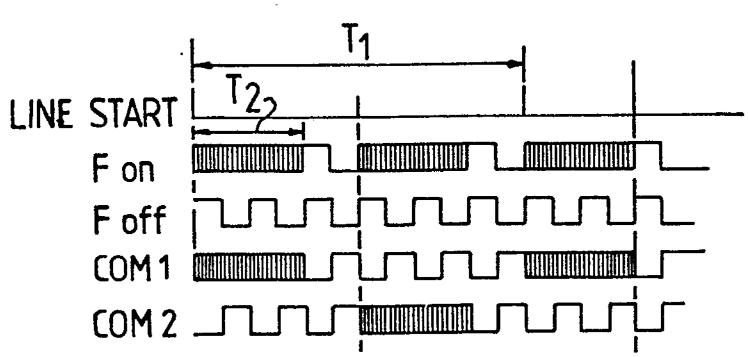

0083253

2/14

Fig 2(a)

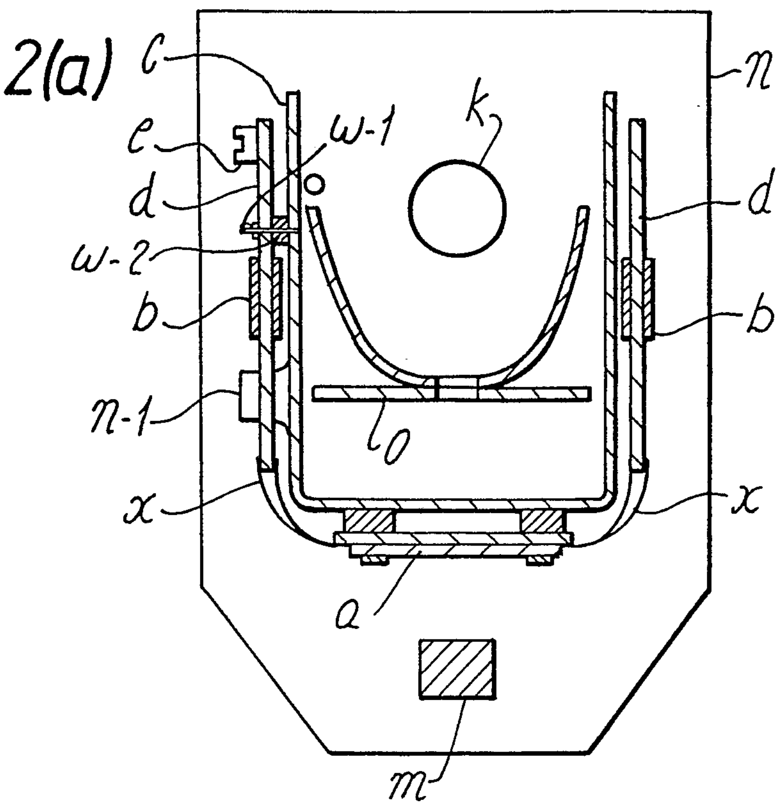


Fig.2(b).

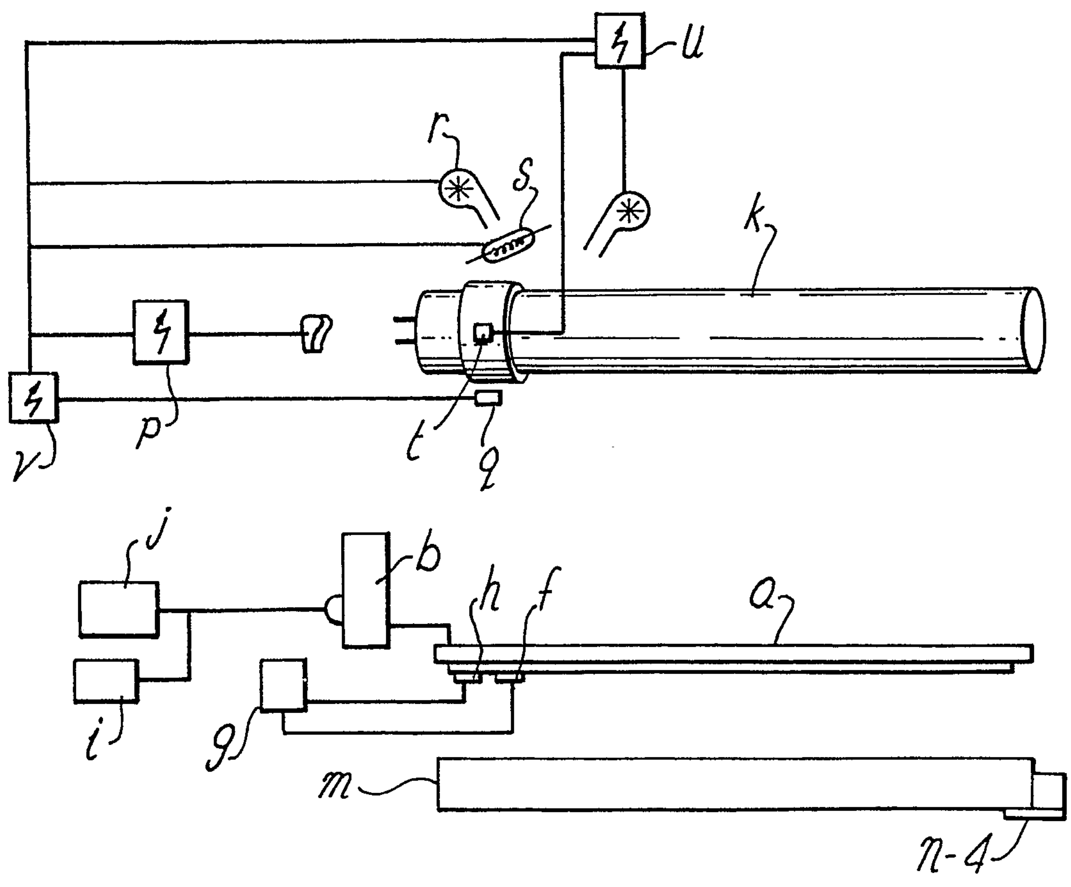

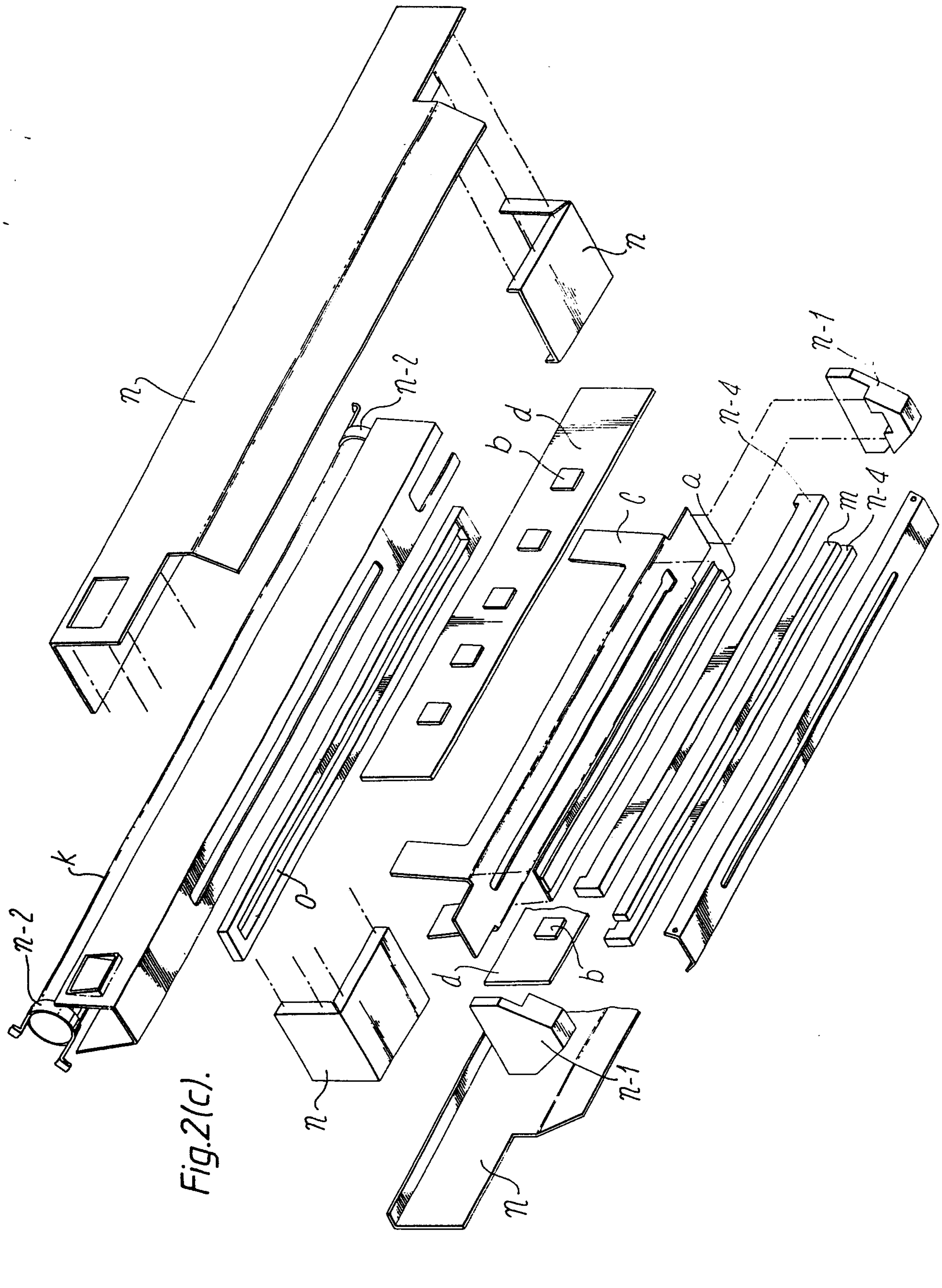


Fig.2(c).

Fig.3(a).

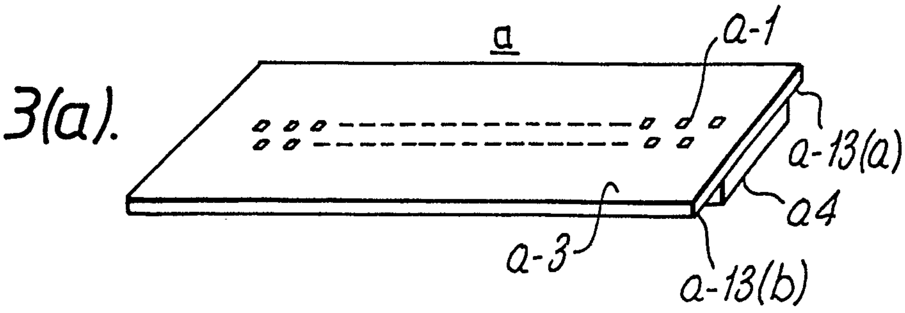


Fig.3(b).

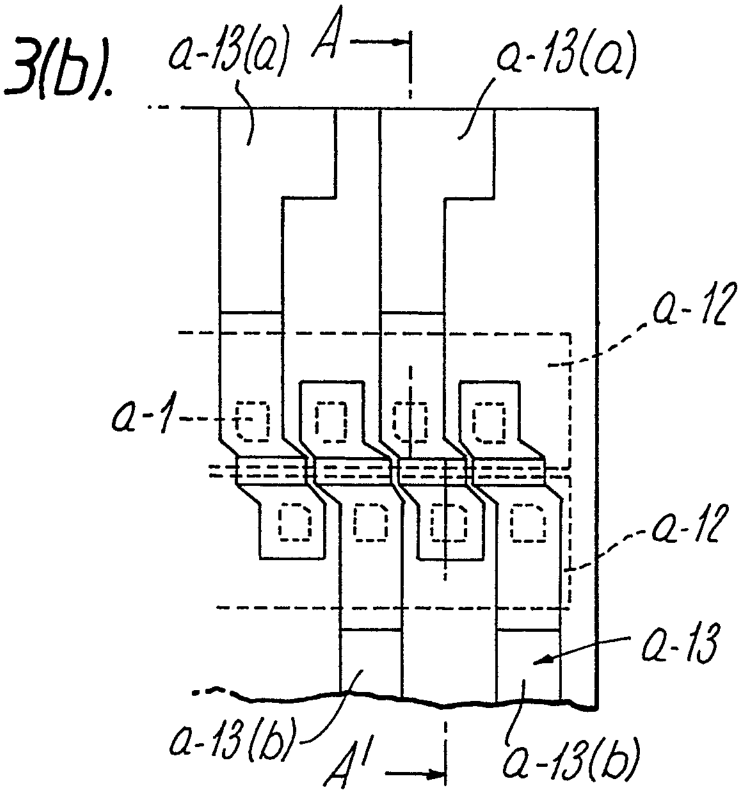


Fig.3(c).

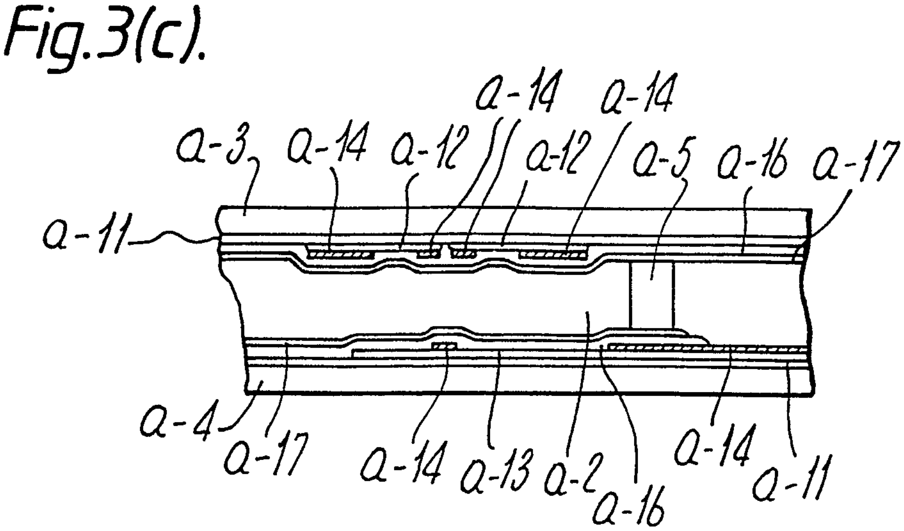

Fig.4(a).

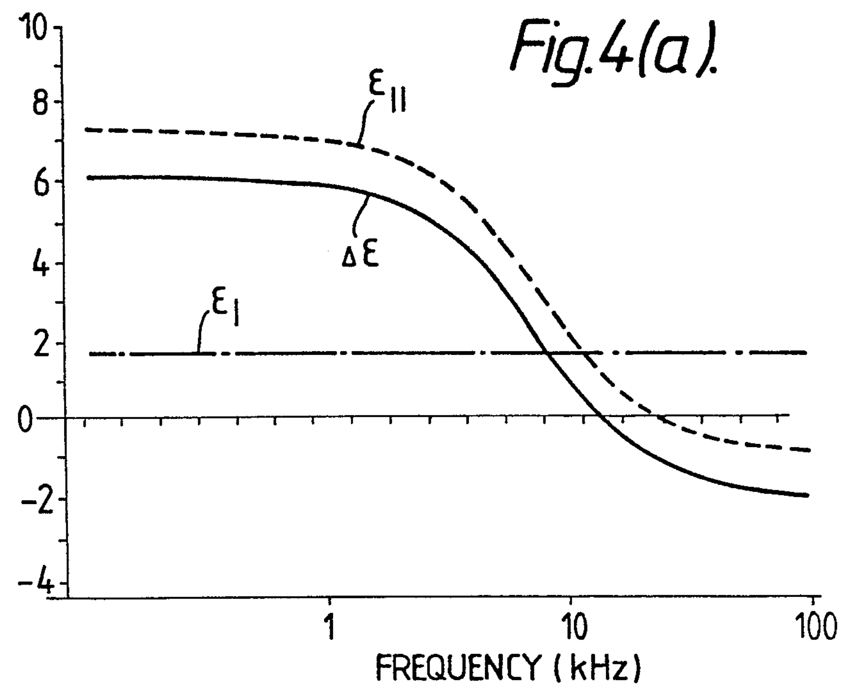


Fig.4(b).

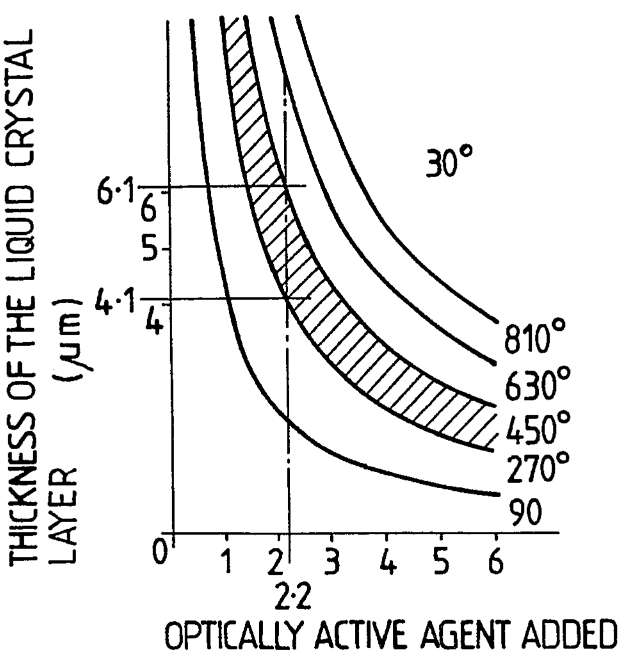


Fig.4(c).

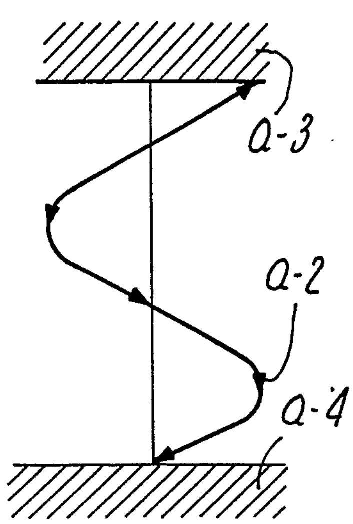

# Fig.4(d).

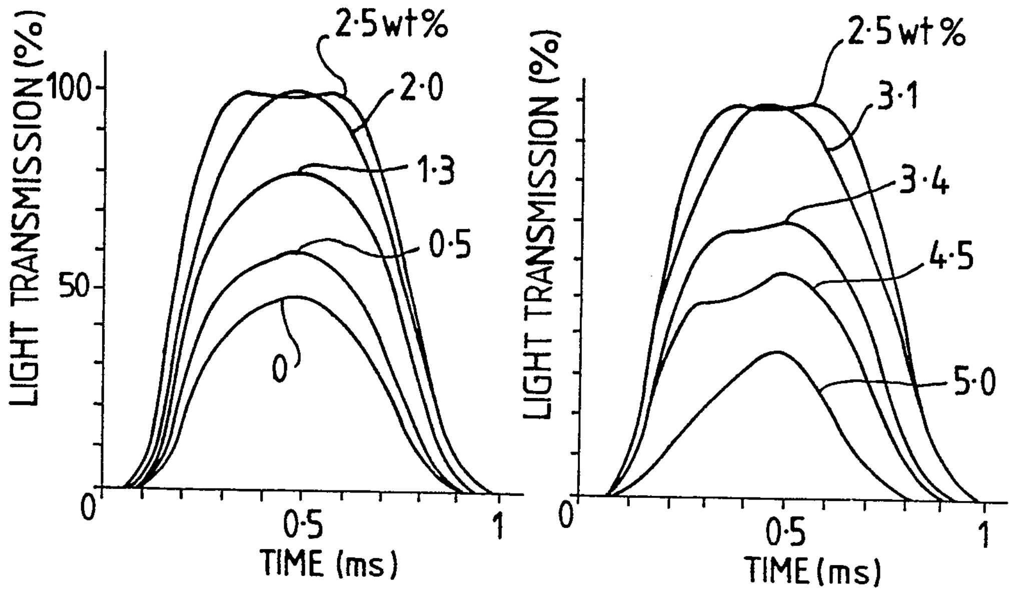
LIGHT TRANSMISSION (%)
100
50
0
2·5wt%
2·0
1·3
0·5
0
0·5
1
TIME (ms)
LIGHT TRANSMISSION (%)
2·5wt%
3·1
3·4
4·5
5·0
0
0·5
1
TIME (ms)

# Fig.4(e).

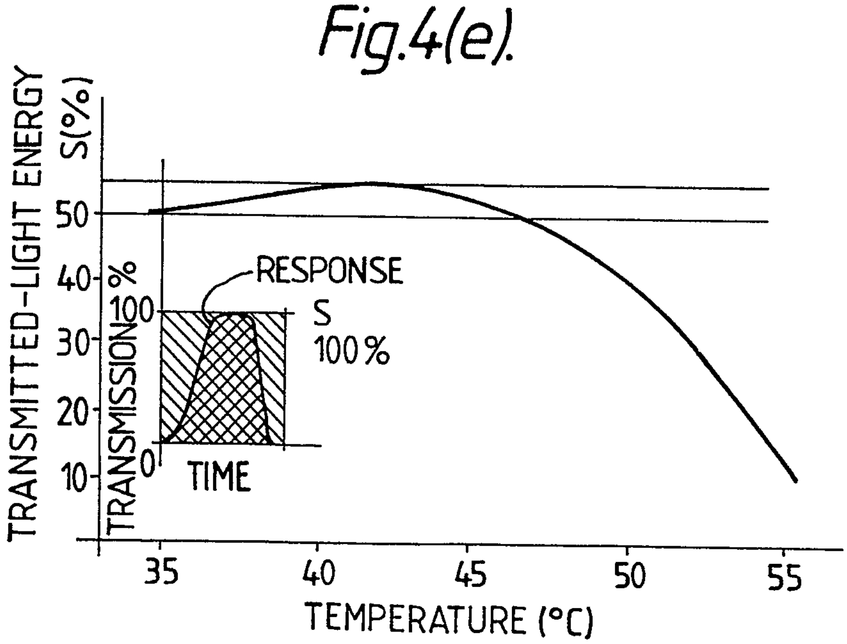
TRANSMITTED-LIGHT ENERGY S(%)
50
40
30
20
10
TRANSMISSION %
100
0
RESPONSE
S
100%
TIME
35
40
45
50
55
TEMPERATURE (°C)

Fig. 5(b).

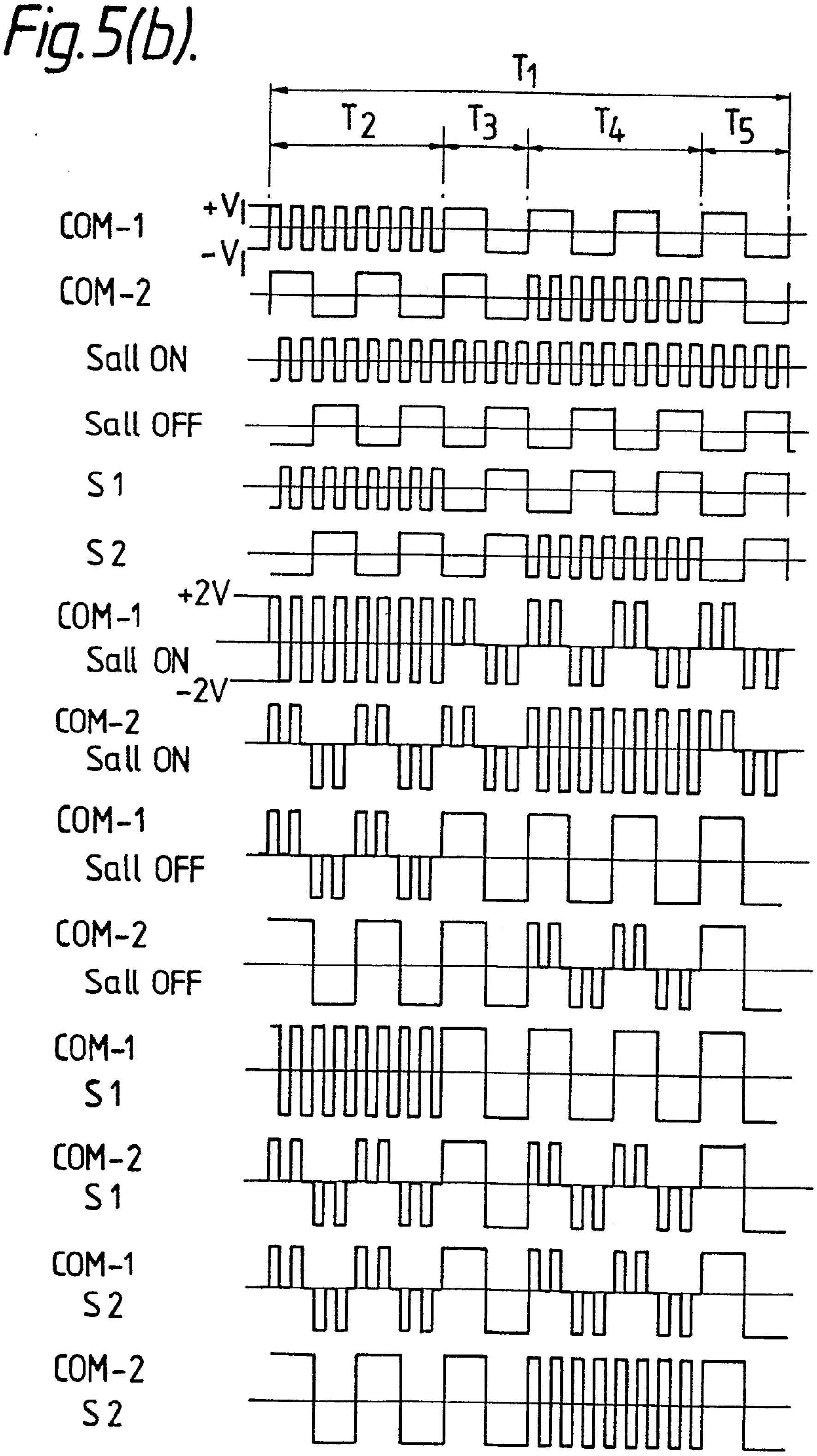
T1
T2
T3
T4
T5
COM-1
+V1
-V1
COM-2
Sall ON
Sall OFF
S 1
S 2
+2V
COM-1
Sall ON
-2V
COM-2
Sall ON
COM-1
Sall OFF
COM-2
Sall OFF
COM-1
S 1
COM-2
S 1
COM-1
S 2
COM-2
S 2

Fig.6(a).

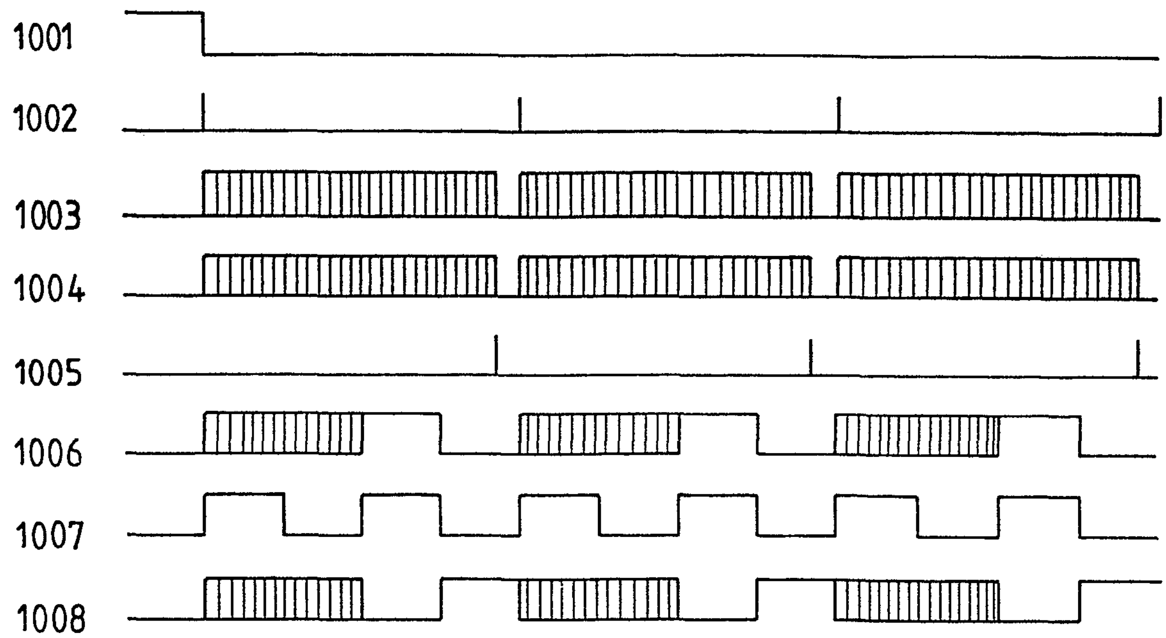
1001
1002
1003
1004
1005
1006
1007
1008

Fig.6(c).

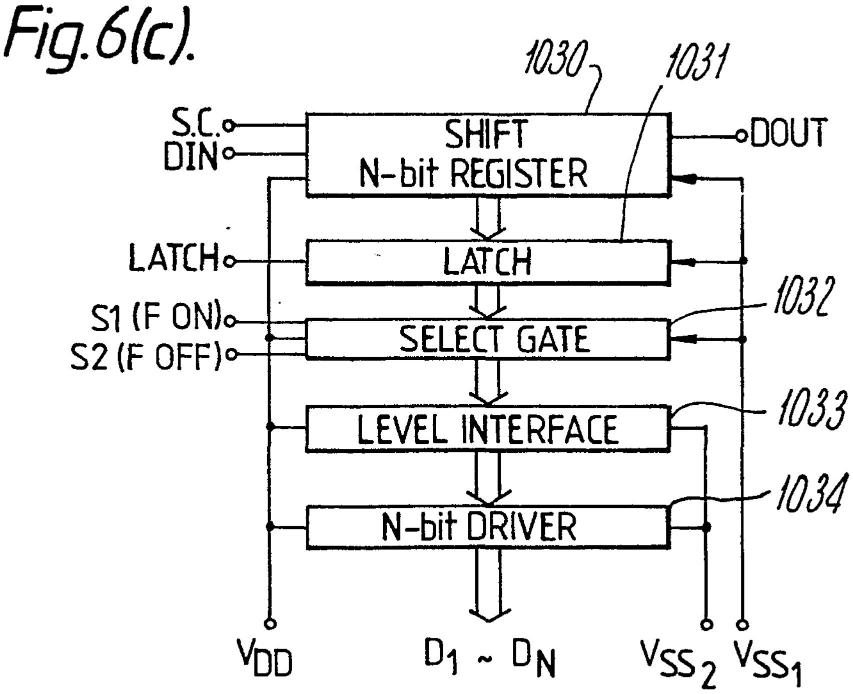
1030
1031
S.C.
DIN
SHIFT
N-bit REGISTER
DOUT
LATCH
LATCH
S1 (F ON)
S2 (F OFF)
SELECT GATE
1032
LEVEL INTERFACE
1033
N-bit DRIVER
1034
VDD
D1 ~ DN
VSS2
VSS1

Fig.6(b).

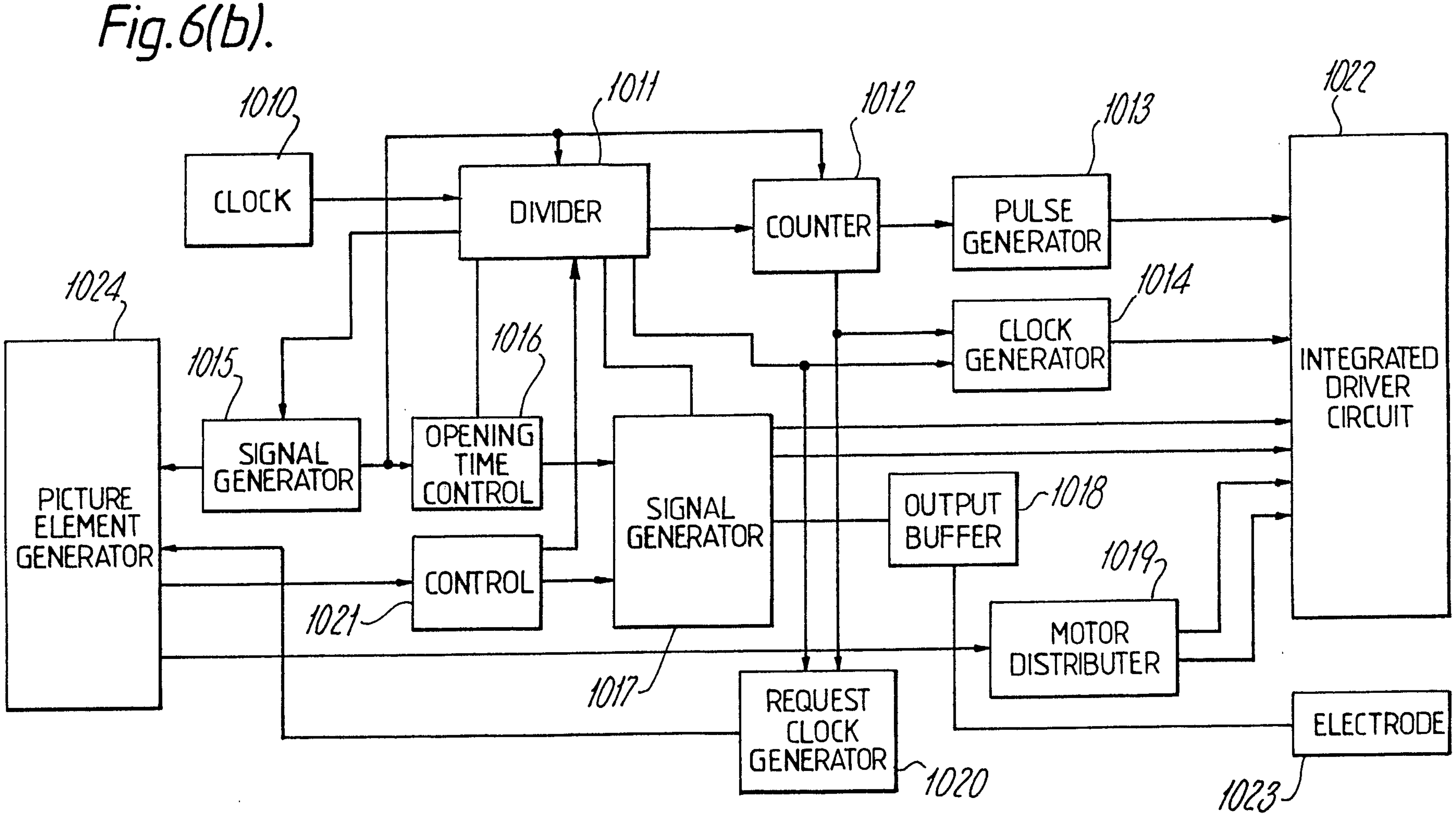
CLOCK
1010
DIVIDER
1011
COUNTER
1012
PULSE GENERATOR
1013
CLOCK GENERATOR
1014
INTEGRATED DRIVER CIRCUIT
1022
PICTURE ELEMENT GENERATOR
1024
SIGNAL GENERATOR
1015
OPENING TIME CONTROL
1016
SIGNAL GENERATOR
1017
CONTROL
1021
OUTPUT BUFFER
1018
MOTOR DISTRIBUTER
1019
REQUEST CLOCK GENERATOR
1020
ELECTRODE
1023

Fig.7(a).

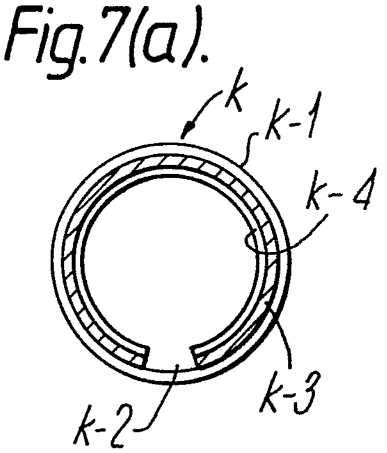


Fig.7(b).

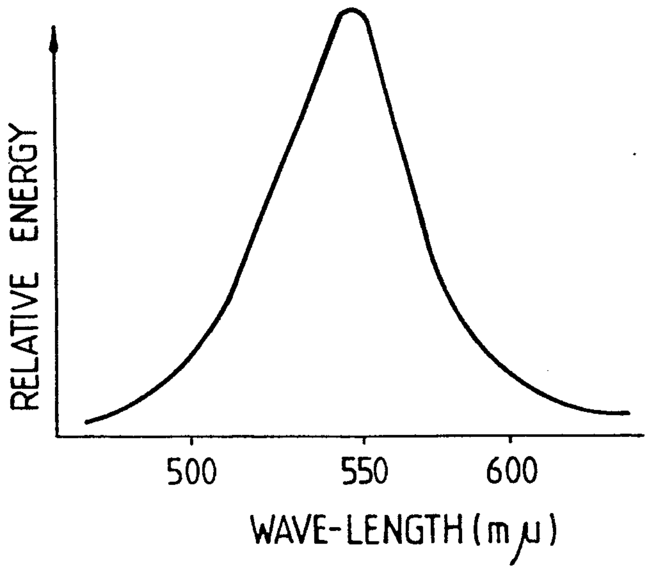


Fig.7(c).

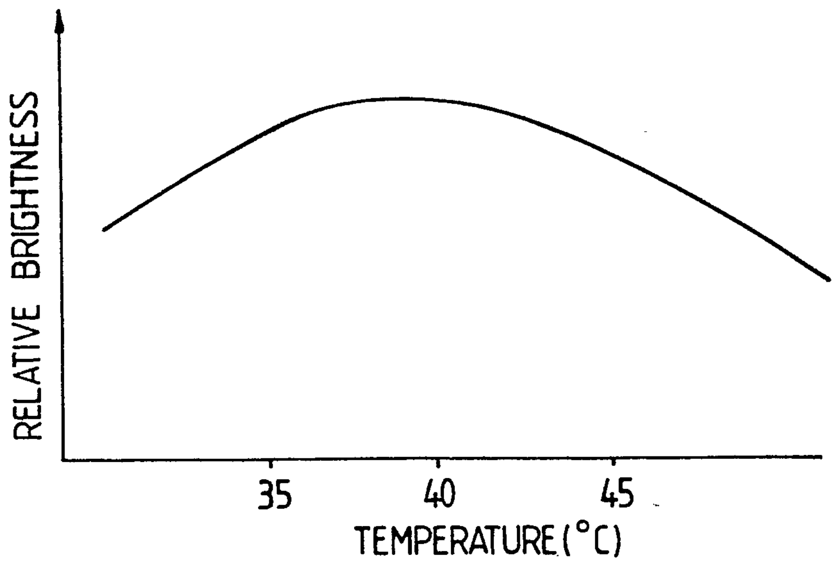


Fig.8.

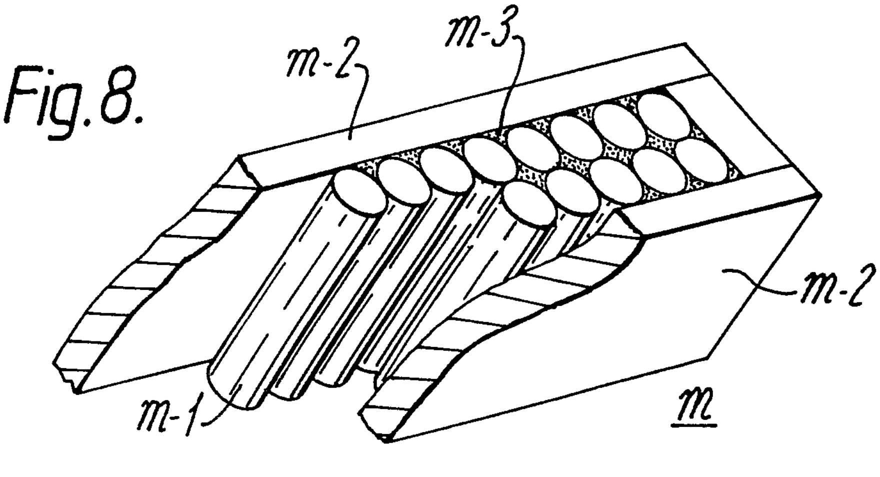

Fig.9.

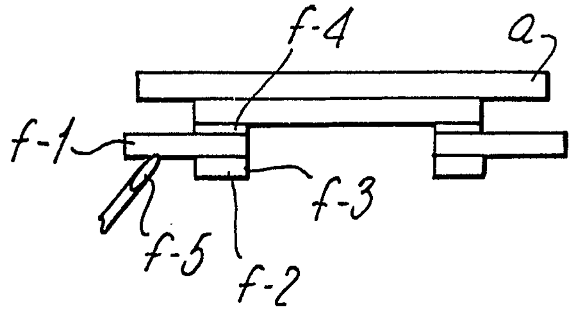


Fig.10(a).

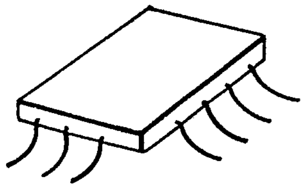

Fig.10(b).

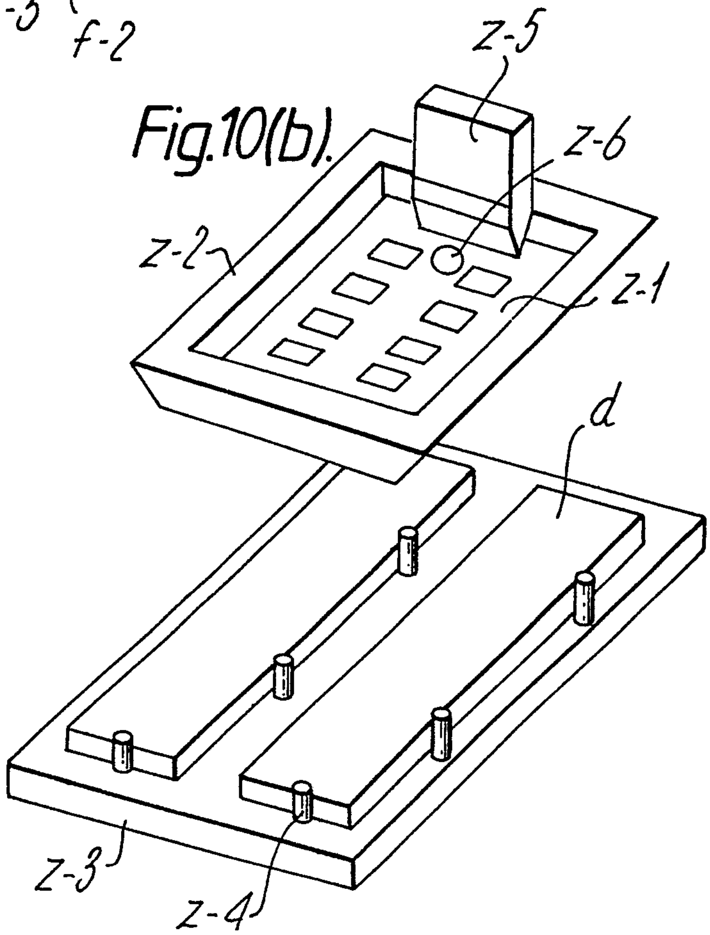


Fig.10(c).

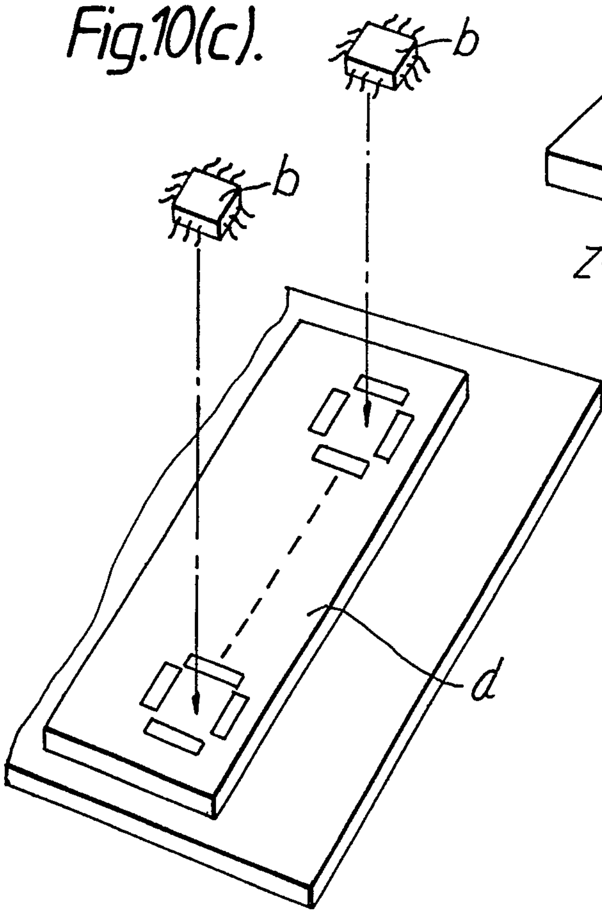


Fig.10(d).

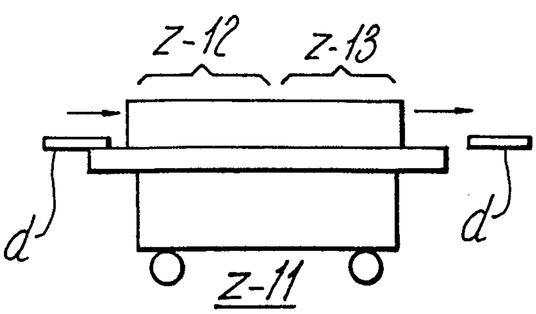

Fig.10(e).

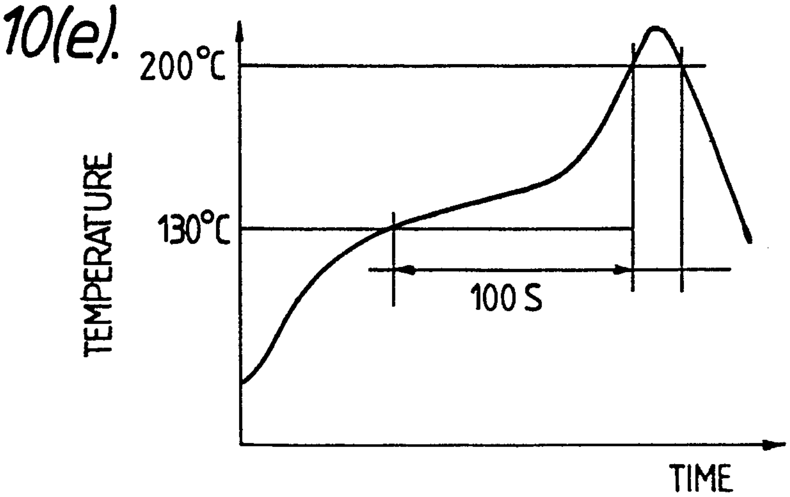


Fig.10(f).

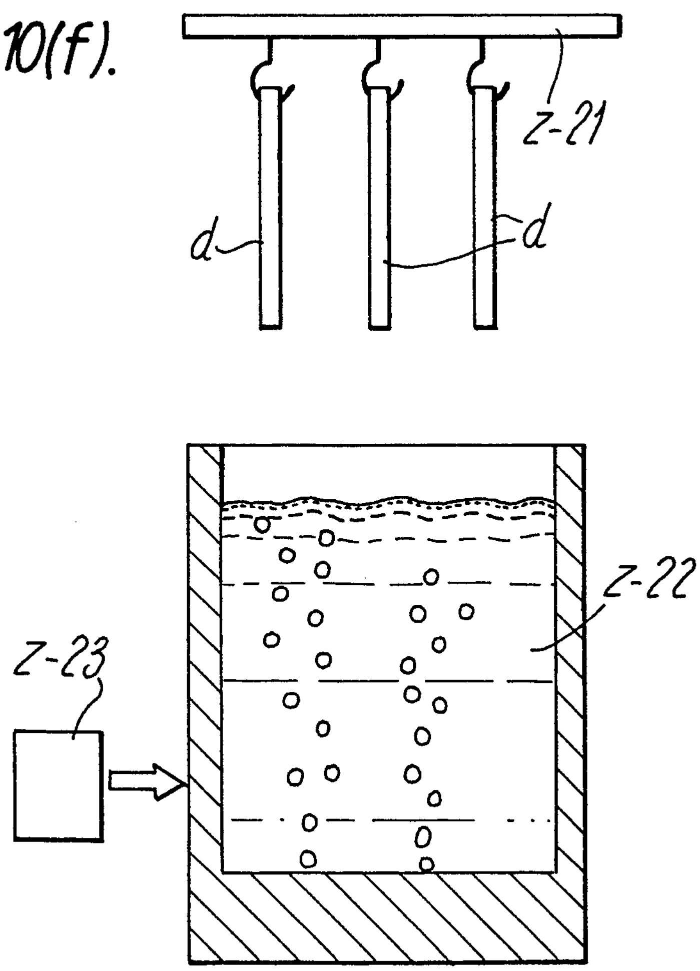

Fig.10(g).

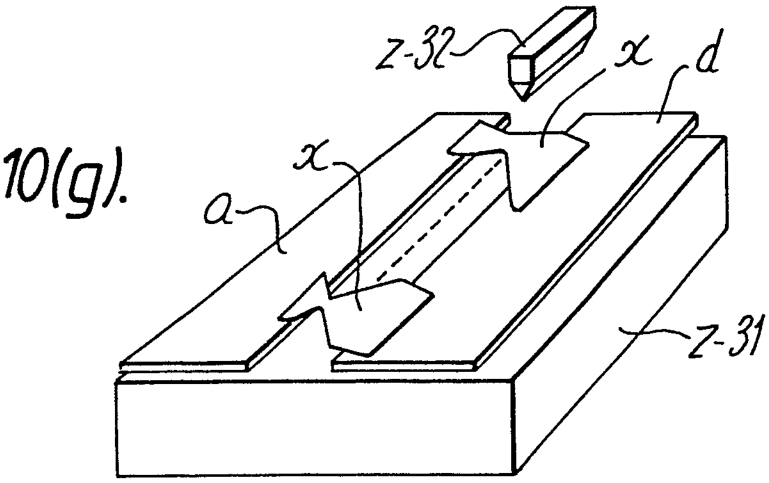


Fig.10(h).

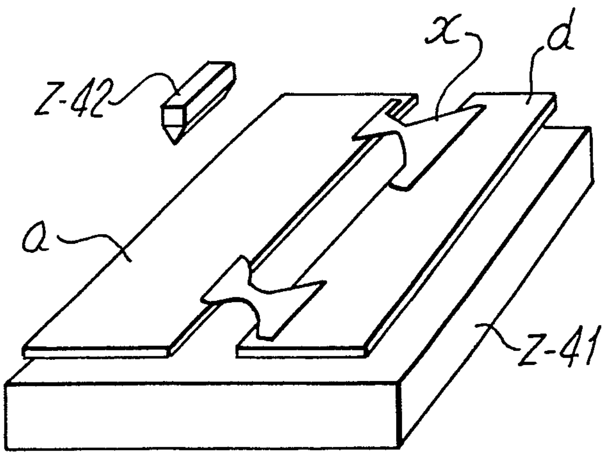


Fig.10(i).

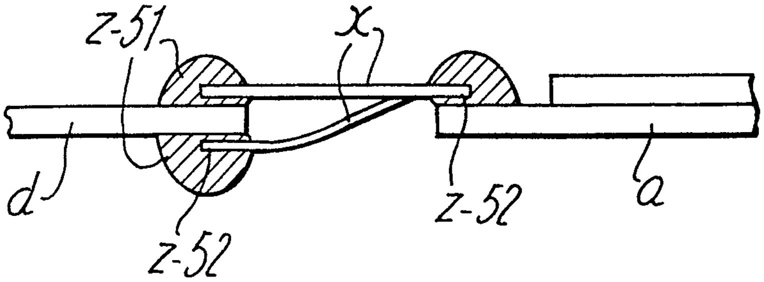

Fig.11.

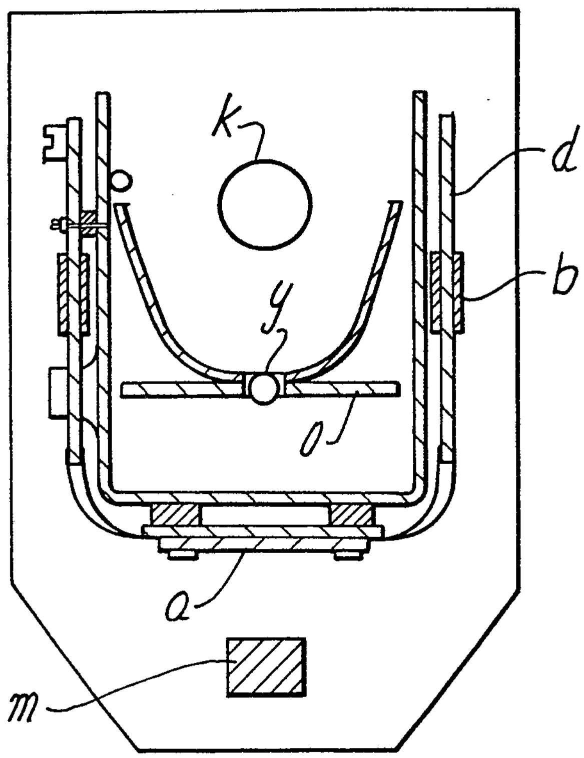


Fig.12(a).

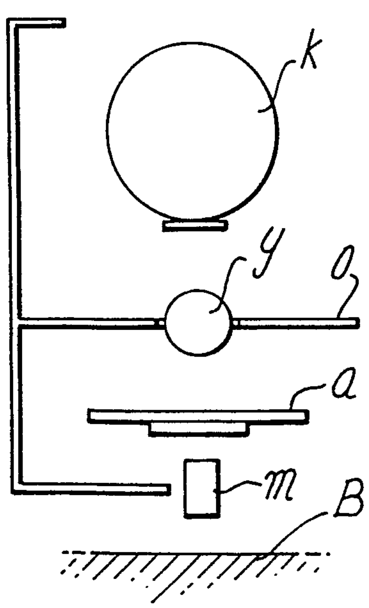


Fig.12(b).